(19) Europäisches Patentamt
European Patent Office
Office européen des brevets

(11) **EP 4 780 048 A1**

(12) **EUROPEAN PATENT APPLICATION**
published in accordance with Art. 153(4) EPC

(43) Date of publication:
**22.07.2026  Bulletin 2026/30**

(21) Application number: **23953458.9**

(22) Date of filing: **26.09.2023**

(51) International Patent Classification (IPC):
**H04W 24/02** (2009.01)

(52) Cooperative Patent Classification (CPC):
**H04W 24/02**

(86) International application number:
**PCT/CN2023/121815**

(87) International publication number:
**WO 2025/065300 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen 518129 (CN)**

(72) Inventors:
• **PENG, Xiaohui**
  **Shenzhen, Guangdong 518129 (CN)**
• **LUO, Jiajin**
  **Shenzhen, Guangdong 518129 (CN)**
• **ZHOU, Baojian**
  **Shenzhen, Guangdong 518129 (CN)**
• **ZHANG, Ping**
  **Shenzhen, Guangdong 518129 (CN)**
• **YU, Yang**
  **Shenzhen, Guangdong 518129 (CN)**
• **YAN, Min**
  **Shenzhen, Guangdong 518129 (CN)**
• **YANG, Xun**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **COMMUNICATION METHOD AND APPARATUS**

(57)    This application provides a communication method and apparatus, and relates to the field of communication technologies. In the method, a first communication apparatus may separately send a first signal in a single frequency band, for example, a first frequency band, and send second signals in a plurality of frequency bands, for example, M second frequency bands, so that a second communication apparatus may perform both single-frequency-band sensing and multi-frequency-band sensing, thereby enhancing a sensing capability. For example, the second communication apparatus may use a sensing result, for example, a delay of a scattering point, obtained through single-frequency-band sensing and measurement to calibrate phases and/or system delays of signals received in a plurality of frequency bands, so as to coherently combine the plurality of frequency bands into a larger bandwidth, so that not only range resolution can be improved, but also multi-frequency-band measurement can effectively resist impact of RCS fluctuation, thereby improving sensing and detection performance.

FIG. 8

**Description**

**TECHNICAL FIELD**

This application relates to the field of communication technologies, and in particular, to a communication method and apparatus.

**BACKGROUND**

Harmonized communication and sensing (harmonized communication and sensing, HCS) is also referred to as an integrated sensing and communication (Integrated sensing and communication, ISAC) technology. In a process of technology evolution from a 5th generation (The 5th generation, 5G) mobile communication system to a 5G-advanced (5G-advanced, 5G-A) mobile communication system and a future 6th generation (The 6th generation, 6G) mobile communication system, the integrated sensing and communication technology is considered as one of key technologies that can extend a service capability of a mobile communication network, and has been defined by the International Telecommunication Union Radiocommunication Sector (ITU-Radiocommunication sector, ITU-R) as one of six visions of IMT2030 (6G). A core idea of the technology is to add a sensing capability to a mobile communication network, and construct a capability of detecting, tracking, and imaging a target, so that communication and sensing capabilities are integrated into one network.

However, a current sensing technology may not satisfy a future application scenario.

**SUMMARY**

Embodiments of this application provide a communication method and apparatus, to enhance a sensing capability.

To achieve the foregoing objective, the following technical solutions are used in this application. According to a first aspect, a communication method is provided, applied to a first communication apparatus. The method includes: The first communication apparatus sends a first signal in a first frequency band, and sends second signals in M inconsecutive second frequency bands, where M is an integer greater than or equal to 2. The first signal and the second signals are signals used for sensing.

Based on the methods in the first aspect and the second aspect, it can be learned that the first communication apparatus may separately send the first signal in a single frequency band, for example, the first frequency band, and send the second signals in a plurality of frequency bands, for example, the M second frequency bands, so that the second communication apparatus may perform both single-frequency-band sensing and multi-frequency-band sensing, thereby enhancing a sensing capability.

It may be understood that the first communication apparatus may be a terminal, an apparatus including a terminal, or a chip in a terminal. Alternatively, the first communication apparatus may be a network device, an apparatus including a network device, or a chip in a network device.

In a possible design solution, a bandwidth of the first frequency band is greater than a bandwidth of any one of the M second frequency bands. In other words, the first frequency band may be a continuous frequency domain resource with a large bandwidth, to ensure sensing performance and resolve as many scattering points as possible.

In a possible design solution, the method according to the first aspect may further include: The first communication apparatus sends capability information to a third communication apparatus, where the capability information indicates frequency bands supported by the first communication apparatus, and the frequency bands supported by the first communication apparatus include the first frequency band and the M second frequency bands. In this way, the first communication apparatus can be configured to send a signal in the frequency band supported by the first communication apparatus, to avoid a sensing failure caused due to an unsupported frequency band. Optionally, the method according to the first aspect may further include: The first communication apparatus receives first configuration information from the third communication apparatus. The first configuration information may indicate the first communication apparatus to send a signal in the first frequency band. In other words, the third communication apparatus can configure, based on a capability of the first communication apparatus, a frequency band that can be supported by the first communication apparatus, that is, the first frequency band.

Further, the first configuration information may include at least one of the following: a frequency of the first frequency band, a bandwidth of the first frequency band, or a period for sending a signal by the first communication apparatus in the first frequency band. The frequency of the first frequency band may be a center frequency or an endpoint frequency band, or may be any frequency preconfigured by the first communication apparatus and the third communication apparatus or predefined in a protocol. This is not limited. Frequency domain resources included in the first frequency band may be determined by combining the frequency of the first frequency band and the bandwidth of the first frequency band, so that the first communication apparatus can send a signal based on a period by using these frequency domain resources.

It may be understood that the frequency and bandwidth of the first frequency band and the period for sending a signal in the first frequency band are all optional information elements. If the first communication apparatus knows the frequency of the first frequency band by default, the bandwidth and the period may be indicated, and the frequency is not indicated. If the first communication apparatus knows the bandwidth of the first frequency band by default, the frequency and the period may be indicated, and the bandwidth is not indicated, and so on. Details are not described.

Further, that the first communication apparatus sends the first signal in the first frequency band includes: The first communication apparatus sends the first signal in the first frequency band based on the first configuration information. In other words, the first communication apparatus may be triggered by the received first configuration information to send the first signal in the first frequency band, to implement on-demand sending, and avoid a waste of communication resources caused because a signal is still sent when sensing is not required. Certainly, the trigger manner may not be limited to the first configuration information, but may be other information different from the first configuration information, for example, first indication information. In this case, if the first communication apparatus receives the first indication information, the first communication apparatus sends the first signal in the first frequency band.

Optionally, the method according to the first aspect may further include: The first communication apparatus receives second configuration information from the third communication apparatus. The second configuration information may indicate the first communication apparatus to send signals in the M second frequency bands. Similarly, the third communication apparatus can also configure, based on the capability of the first communication apparatus, a frequency band that can be supported by the first communication apparatus, that is, the M second frequency bands.

Further, the second configuration information includes at least one of the following: a frequency of each of the M second frequency bands, a bandwidth of each of the M second frequency bands, or a period for sending signals by the first communication apparatus in the M second frequency bands. The frequency of each second frequency band may be a center frequency or an endpoint frequency band, or may be any frequency preconfigured by the first communication apparatus and the third communication apparatus or predefined in a protocol. This is not limited. Frequency domain resources included in each second frequency band may be determined by combining the frequency of the second frequency band and the bandwidth of the second frequency band, so that the first communication apparatus can send a signal based on a period by using these inconsecutive frequency domain resources.

It may be understood that a frequency and a bandwidth of any second frequency band and a period for sending a signal in the second frequency band are all optional information elements. If the first communication apparatus knows the frequency of the second frequency band by default, only the bandwidth and the period may be indicated. If the first communication apparatus knows the frequency band of the second frequency band by default, only the frequency band and the period may be indicated, and so on. Details are not described.

It may be further understood that the first configuration information and the second configuration information may be sent together, for example, carried in same signaling or a same message, or may be separately sent, for example, carried in different signaling or messages. This is not specifically limited.

Further, that the first communication apparatus sends the second signals in the M inconsecutive second frequency bands includes: The first communication apparatus sends the second signals in the M inconsecutive second frequency bands based on the second configuration information. In other words, the first communication apparatus may be triggered by the received second configuration information to send the second signals in the M second frequency bands, to implement on-demand sending, and avoid a waste of communication resources caused because a signal is still sent when sensing is not required. Certainly, the trigger manner may not be limited to the second configuration information, but may be other information different from the second configuration information, for example, second indication information. In this case, if the first communication apparatus receives the second indication information, the first communication apparatus sends the second signals in the M second frequency bands.

In another possible design solution, the method according to the first aspect may further include: The first communication apparatus receives capability information from the second communication apparatus, where the capability information indicates frequency bands supported by the second communication apparatus, and the frequency bands supported by the second communication apparatus include the first frequency band and the M second frequency bands, to avoid a sensing failure caused when the first communication apparatus sends a signal in a frequency band not supported by the second communication apparatus.

Optionally, the method according to the first aspect may further include: The first communication apparatus sends third configuration information to the second communication apparatus, where the third configuration information may indicate the second communication apparatus to receive a signal in the first frequency band, to implement receiving and sending alignment, and avoid a sensing failure caused because the second communication apparatus receives a signal in another frequency band.

Further, the third configuration information includes at least one of the following: a frequency of the first frequency band, a bandwidth of the first frequency band, or a period for receiving a signal by the second communication apparatus in the first frequency band. Similar to the foregoing description, the frequency of the first frequency band may be a center frequency or an endpoint frequency band, or may be any frequency preconfigured by the first communication apparatus and the second communication apparatus or predefined in a protocol. This is not limited. Frequency domain resources included in the first frequency band may be determined by combining the frequency of the first frequency band and the bandwidth of the first frequency band, so that the second communication apparatus can receive a signal based on a period by using these frequency domain resources.

It may be understood that, similar to the foregoing description, the frequency and bandwidth of the first frequency band and the period for receiving a signal in the first frequency band are all optional information elements. If the second communication apparatus knows the frequency of the first frequency band by default, only the bandwidth and the period may be indicated. If the second communication apparatus knows the frequency band of the first frequency band by default, only the frequency band and the period may be indicated, and so on. Details are not described. Optionally, the method according to the first aspect may further include: The first communication apparatus sends fourth configuration information to the second communication apparatus. The fourth configuration information may indicate the second communication apparatus to receive signals in the M second frequency bands, to implement receiving and sending alignment, and avoid a sensing failure caused because the second communication apparatus receives a signal in another frequency band.

Further, the fourth configuration information includes at least one of the following: a frequency of each of the M second frequency bands, a bandwidth of each of the M second frequency bands, or a period for receiving signals by the second communication apparatus in the M second frequency bands. Similar to the foregoing description, the frequency of each second frequency band may be a center frequency or an endpoint frequency band, or may be any frequency preconfigured by the first communication apparatus and the second communication apparatus or predefined in a protocol. This is not limited. Frequency domain resources included in each second frequency band may be determined by combining the frequency of the second frequency band and the bandwidth of the second frequency band, so that the second communication apparatus can receive a signal based on a period by using these inconsecutive frequency domain resources.

It may be understood that, similar to the foregoing description, a frequency and a bandwidth of any second frequency band and a period for sending a signal in the second frequency band are all optional information elements. If the second communication apparatus knows the frequency of the second frequency band by default, only the bandwidth and the period may be indicated. If the second communication apparatus knows the frequency band of the second frequency band by default, only the frequency band and the period may be indicated, and so on. Details are not described herein.

It may be further understood that the third configuration information and the fourth configuration information may be sent together, for example, carried in same signaling or a same message, or may be separately sent, for example, carried in different signaling or messages. This is not specifically limited.

In a possible design solution, the first signal is used to determine a delay of a scattering point, and the delay of the scattering point is a delay required for acting (for example, in a mechanism such as reflection, diffraction, or scattering), by the scattering point, on a signal sent by the first communication apparatus and then propagating the signal to a communication apparatus that receives the signal. Based on this, the second signals are used to coherently combine at least two of the M second frequency bands, to obtain a bandwidth larger than that of the first frequency band, thereby further improving sensing performance.

According to a second aspect, a communication method is provided, applied to a second communication apparatus. The method includes: The second communication apparatus receives a third signal in a first frequency band; receives fourth signals in M inconsecutive second frequency bands; and performs sensing processing based on the third signal and the fourth signals, where M is an integer greater than or equal to 2.

It may be understood that the second communication apparatus may also be a terminal, an apparatus including a terminal, or a chip in a terminal. Alternatively, the second communication apparatus may be a network device, an apparatus including a network device, or a chip in a network device.

In a possible design solution, a bandwidth of the first frequency band is greater than a bandwidth of any one of the M second frequency bands.

In a possible design solution, that the second communication apparatus performs sensing processing based on the third signal and the fourth signals includes: The second communication apparatus performs, based on the third signal and the fourth signals, sensing processing for coherently combining the M second frequency bands, for example, coherently combining the M second frequency bands into a frequency band with a bandwidth larger than that of the first frequency band, so that a sensing capability can be enhanced, and sensing performance can be improved.

Optionally, that the second communication apparatus performs, based on the third signal and the fourth signals, sensing processing for coherently combining the M second frequency bands includes: The second communication apparatus determines respective system delays of at least two of the M second frequency bands and/or a phase difference between the at least two second frequency bands based on the third signal and the fourth signals; and the second communication apparatus performs, based on the respective system delays of the at least two second frequency bands and/or the phase difference between the at least two second frequency bands, sensing processing for coherently combining the at least two second frequency bands.

It may be understood that a phase difference may be generated when signals in different second frequency bands are processed by different system hardware in a receiving and sending process, and different system hardware may generate different system delays. Therefore, as long as a phase difference between two different frequency bands and respective system delays of the frequency bands can be determined, the two different frequency bands can be coherently combined, to improve sensing performance.

In a possible design solution, the method according to the second aspect may further include: The second communication apparatus receives capability information from a first communication apparatus. The capability information indicates frequency bands supported by the first communication apparatus, and the frequency bands supported by the first communication apparatus include the first frequency band and the M second frequency bands.

Optionally, the method according to the second aspect may further include: The second communication apparatus sends first configuration information to the first communication apparatus, where the first configuration information may indicate the first communication apparatus to send a signal in the first frequency band.

Further, the first configuration information may include at least one of the following: a frequency of the first frequency band, a bandwidth of the first frequency band, or a period for sending a signal by the first communication apparatus in the first frequency band.

Further, that the second communication apparatus sends the first configuration information to the first communication apparatus includes: The second communication apparatus sends the first configuration information to the first communication apparatus when the M second frequency bands cannot be coherently combined, to trigger the first communication apparatus to send a signal in the first frequency band.

Optionally, the method according to the second aspect may further include: The second communication apparatus sends second configuration information to the first communication apparatus. The second configuration information may indicate the first communication apparatus to send signals in the M second frequency bands.

Further, the second configuration information includes at least one of the following: a frequency of each of the M second frequency bands, a bandwidth of each of the M second frequency bands, or a period for sending signals by the first communication apparatus in the M second frequency bands.

Further, that the second communication apparatus sends the second configuration information to the first communication apparatus includes: When a quantity of scattering points observed by the second communication apparatus in the first frequency band is greater than a preset threshold, that is, the quantity of scattering points can satisfy coherent combination of the M second frequency bands, the first communication apparatus may send the second configuration information to the first communication apparatus, to trigger the first communication apparatus to send signals in the M second frequency bands, so as to implement coherent combination of the M second frequency bands.

In another possible design solution, the method according to the second aspect may further include: The second communication apparatus sends capability information to a third communication apparatus. The capability information may indicate frequency bands supported by the second communication apparatus, and the frequency bands supported by the second communication apparatus include the first frequency band and the M second frequency bands.

Optionally, the method according to the second aspect may further include: The second communication apparatus receives third configuration information from the third communication apparatus, where the third configuration information indicates the second communication apparatus to receive a signal in the first frequency band.

Further, the third configuration information may include at least one of the following: a frequency of the first frequency band, a bandwidth of the first frequency band, or a period for receiving a signal by the second communication apparatus in the first frequency band.

Optionally, the method according to the second aspect may further include: The second communication apparatus receives fourth configuration information from the third communication apparatus, where the fourth configuration information indicates the second communication apparatus to receive signals in the M second frequency bands.

Further, the fourth configuration information includes at least one of the following: a frequency of each of the M second frequency bands, a bandwidth of each of the M second frequency bands, or a period for receiving signals by the second communication apparatus in the M second frequency bands.

In a possible design solution, the fourth signals received in the M second frequency bands include an $i^{th}$ fourth signal and a $j^{th}$ fourth signal, the $i^{th}$ fourth signal is a signal received in an $i^{th}$ second frequency band, the $j^{th}$ fourth signal is a signal received in a $j^{th}$ second frequency band, i and j are different, and i and j are any integers from 1 to M. The at least two second frequency bands include the $i^{th}$ second frequency band and the $j^{th}$ second frequency band. In this case, that the second communication apparatus determines the respective system delays of the at least two of the M second frequency bands and/or the phase difference between the at least two second frequency bands based on the third signal and the fourth signals includes: The second communication apparatus may determine respective delays of N scattering points based on the third signal. The second communication apparatus determines a phase difference between the $i^{th}$ second frequency band and the $j^{th}$ second frequency band and/or system delays based on the respective delays of the N scattering points, a phase of the $i^{th}$ fourth signal, and a phase of the $j^{th}$ fourth signal. N is a positive integer, and the respective delays of the N scattering points are delays required for acting on (for example, in a mechanism such as reflection, diffraction, or scattering), by the N scattering points, a signal and then separately propagating the signal to the second communication apparatus after the signal is sent by the second communication apparatus or a communication apparatus other than the second communication apparatus.

For example, at least one of the phase difference and the system delay, the respective delays of the N scattering points, the phase of the $i^{th}$ fourth signal, and the phase of the $j^{th}$ fourth signal satisfy the following relationship:

$$\phi_{i,j}^l = 2\pi(f_j - f_i)\tau^l + 2\pi(f_j\tau_j - f_i\tau_i) + \Delta\phi_{ij}.$$

$\phi_{i,j}^l$ is a difference between the phase of the $i^{th}$ fourth signal and the phase of the $j^{th}$ fourth signal, $f_i$ is a center frequency of the $i^{th}$ second frequency band, $f_j$ is a center frequency of the $j^{th}$ second frequency band, $\tau^l$ is a delay of an $l^{th}$ scattering point in the N scattering points, $l$ is any integer from 1 to N, $\tau_i$ is the first system delay, $\tau_j$ is the second system delay, and $\Delta\phi_{ij}$ is the phase difference.

Further, the phase difference may be a difference between a phase offset generated when the second communication apparatus and the first communication apparatus process a signal in the $i^{th}$ second frequency band and a phase offset generated when the second communication apparatus and the first communication apparatus process a signal in the $j^{th}$ second frequency band. The first system delay is a delay generated when the second communication apparatus and the first communication apparatus process a signal in the $i^{th}$ second frequency band. The second system delay is a delay generated when the second communication apparatus and the first communication apparatus process a signal in the $j^{th}$ second frequency band.

It can be learned that, if a delay of a same scattering point, for example, respective delays of a scattering point 1, a scattering point 2, and a scattering point 3, can be learned, and phases of fourth signals on which these scattering points act can be observed in different second frequency bands, a phase difference between the different second frequency bands and/or system delays can be determined.

In a possible design solution, signal strength of a signal corresponding to the $l^{th}$ scattering point is greater than a strength threshold, signal strength of a signal corresponding to another scattering point is less than or equal to the strength threshold, and the another scattering point is a scattering point other than the $l^{th}$ scattering point in an $l^{th}$ range resolution unit in which the $l^{th}$ scattering point is located. In other words, in the $l^{th}$ range resolution unit, usually, the signal strength of only the $l^{th}$ scattering point is greater than the strength threshold, and the $l^{th}$ scattering point may be considered as an isolated point in the $l^{th}$ range resolution unit. Certainly, there may be no other scattering point, and there is only the $l^{th}$ scattering point. In this way, when the second communication apparatus performs observation in the $l^{th}$ range resolution unit, energy of the $l^{th}$ scattering point may be dominant, so that the $l^{th}$ scattering point can be accurately measured.

In a possible design solution, that the second communication apparatus performs, based on the respective system delays of the at least two second frequency bands and/or the phase difference between the at least two second frequency bands, sensing processing for coherently combining the at least two second frequency bands includes: The second communication apparatus coherently combines the $i^{th}$ second frequency band and the $j^{th}$ second frequency band based on the phase difference and/or the system delays, to obtain respective delays of K scattering points, where K is an integer greater than N, and the respective delays of the K scattering points may be delays required for acting (for example, in a mechanism such as reflection, diffraction, or scattering), by the K scattering points, on a signal and then separately propagating the signal to the second communication apparatus after the signal is sent by another communication apparatus. In other words, the second communication apparatus obtains a larger bandwidth through coherent combination, and can measure the K scattering points (K>N) more than the original scattering points, to improve sensing performance. For example, more accurate sensing measurement can be implemented on a target object in which the K scattering points are located.

It can be learned that, in the foregoing method, the first communication apparatus may send, in separate phases, signals used for sensing. For example, a signal such as the first signal is sent in a single frequency band in a first phase, and signals such as the second signals are sent in a plurality of inconsecutive frequency bands in a second phase. Correspondingly, the second communication apparatus may use a sensing result, for example, a delay of a scattering point, obtained through measurement in the first phase to calibrate phases and/or system delays of signals received in a plurality of frequency bands in the second phase, so as to coherently combine the plurality of frequency bands into a larger bandwidth, so that not only range resolution can be improved, but also multi-frequency-band measurement can effectively resist impact of RCS fluctuation, thereby improving sensing and detection performance.

It may be understood that, for related technical effects of the method according to the second aspect, refer to the related descriptions of the first aspect. Details are not described herein again. According to a third aspect, a communication method is provided, applied to a third communication apparatus. The method includes: The third communication apparatus receives capability information of a first communication apparatus, and sends first configuration information and second configuration information to the first communication apparatus based on the capability information of the first communication apparatus. The capability information of the first communication apparatus indicates frequency bands supported by the first communication apparatus, the frequency bands supported by the first communication apparatus include a first frequency band and M inconsecutive second frequency bands, and M is an integer greater than or equal to 2. The first configuration information indicates the first communication apparatus to send a signal in the first frequency band, the second configuration information indicates the first communication apparatus to send signals in the M second frequency bands, and the signals in the first frequency band and the M second frequency bands are signals used for sensing.

In a possible design solution, the first configuration information includes at least one of the following: a frequency of the first frequency band, a bandwidth of the first frequency band, or a period for sending a signal by the first communication apparatus in the first frequency band.

In a possible design solution, the second configuration information includes at least one of the following: a frequency of each of the M second frequency bands, a bandwidth of each of the M second frequency bands, or a period for sending signals by the first communication apparatus in the M second frequency bands.

In a possible design solution, the method according to the third aspect may further include: The third communication apparatus receives capability information of a second communication apparatus. The capability information of the second communication apparatus indicates frequency bands supported by the second communication apparatus, and the frequency bands supported by the second communication apparatus includes the first frequency band and the M inconsecutive second frequency bands. Correspondingly, that the third communication apparatus sends the first configuration information and the second configuration information to the first communication apparatus based on the capability information of the first communication apparatus includes: The third communication apparatus sends the first configuration information and the second configuration information to the first communication apparatus based on the capability information of the first communication apparatus and the capability information of the second communication apparatus.

According to a fourth aspect, a communication method is provided, applied to a third communication apparatus. The method includes: The third communication apparatus receives capability information of a second communication apparatus, and sends third configuration information and fourth configuration information to the second communication apparatus based on the capability information of the second communication apparatus. The capability information of the second communication apparatus indicates frequency bands supported by the second communication apparatus, the frequency bands supported by the second communication apparatus include a first frequency band and M inconsecutive second frequency bands, and M is an integer greater than or equal to 2. The third configuration information indicates the second communication apparatus to receive a signal in the first frequency band, the fourth configuration information indicates the second communication apparatus to receive signals in the M second frequency bands, and the signals in the first frequency band and the M second frequency bands are signals used for sensing.

In a possible design solution, the third configuration information includes at least one of the following: a frequency of the first frequency band, a bandwidth of the first frequency band, or a period for receiving a signal by the second communication apparatus in the first frequency band. In a possible design solution, the fourth configuration information includes at least one of the following: a frequency of each of the M second frequency bands, a bandwidth of each of the M second frequency bands, or a period for receiving signals by the second communication apparatus in the M second frequency bands.

In a possible design solution, the third communication apparatus receives capability information of a first communication apparatus. The capability information of the first communication apparatus indicates frequency bands supported by the first communication apparatus, and the frequency bands supported by the first communication apparatus include the first frequency band and the M inconsecutive second frequency bands. Correspondingly, that the third communication apparatus sends the third configuration information and the fourth configuration information to the second communication apparatus based on the capability information of the second communication apparatus includes: The third communication apparatus sends the third configuration information and the fourth configuration information to the second communication apparatus based on the capability information of the first communication apparatus and the capability information of the second communication apparatus.

It may be understood that, for related technical effects of the method according to the third aspect or the fourth aspect, refer to the related descriptions of the first aspect. Details are not described herein again.

According to a fifth aspect, a communication apparatus is provided. The communication apparatus includes a module configured to perform the method according to any one of the first aspect to the fourth aspect, for example, a transceiver module and a processing module. For example, the transceiver module indicates receiving and sending functions of the communication apparatus, and the processing module is configured to perform a function of the communication apparatus other than the receiving and sending functions.

In a possible implementation, the communication apparatus according to the fifth aspect includes a processing module and a transceiver module that are configured to perform the method according to the first aspect. The processing module is configured to control the transceiver module to send a first signal in a first frequency band, and send second signals in M inconsecutive second frequency bands, where M is an integer greater than or equal to 2. The first signal and the second signals are signals used for sensing.

In a possible design solution, a bandwidth of the first frequency band is greater than a bandwidth of any one of the M second frequency bands.

In a possible design solution, the processing module is further configured to control the transceiver module to send capability information to a third communication apparatus, where the capability information indicates frequency bands supported by the communication apparatus according to the fifth aspect, and the frequency bands supported by the communication apparatus according to the fifth aspect include the first frequency band and the M second frequency bands.

Optionally, the transceiver module is further configured to receive first configuration information from the third communication apparatus. The first configuration information may indicate the communication apparatus according to the fifth aspect to send a signal in the first frequency band. Further, the first configuration information may include at least one of the following: a frequency of the first frequency band, a bandwidth of the first frequency band, or a period for sending a signal by the communication apparatus according to the fifth aspect in the first frequency band. Further, the processing module is further configured to control, based on the first configuration information, the transceiver module to send the first signal in the first frequency band. Optionally, the transceiver module is further configured to receive second configuration information from the third communication apparatus. The second configuration information may indicate the communication apparatus according to the fifth aspect to send signals in the M second frequency bands.

Further, the second configuration information includes at least one of the following: a frequency of each of the M second frequency bands, a bandwidth of each of the M second frequency bands, or a period for sending signals by the communication apparatus according to the fifth aspect in the M second frequency bands.

In another possible design solution, the transceiver module is further configured to receive capability information from the second communication apparatus, where the capability information indicates frequency bands supported by the second communication apparatus, and the frequency bands supported by the second communication apparatus include the first frequency band and the M second frequency bands.

Optionally, the processing module is further configured to control the transceiver module to send third configuration information to the second communication apparatus, where the third configuration information may indicate the second communication apparatus to receive a signal in the first frequency band.

Further, the third configuration information includes at least one of the following: a frequency of the first frequency band, a bandwidth of the first frequency band, or a period for receiving a signal by the second communication apparatus in the first frequency band.

Optionally, the processing module is further configured to control the transceiver module to send fourth configuration information to the second communication apparatus. The fourth configuration information may indicate the second communication apparatus to receive signals in the M second frequency bands.

Further, the fourth configuration information includes at least one of the following: a frequency of each of the M second frequency bands, a bandwidth of each of the M second frequency bands, or a period for receiving signals by the second communication apparatus in the M second frequency bands.

In a possible design solution, the first signal is used to determine a delay of a scattering point, and the delay of the scattering point is a delay required for acting, by the scattering point, on a signal sent by the communication apparatus according to the fifth aspect and then propagating the signal to a communication apparatus that receives the signal. Based on this, the second signals are used to coherently combine at least two of the M second frequency bands.

In another possible implementation, the communication apparatus according to the fifth aspect further includes a processing module and a transceiver module that are configured to perform the method according to the second aspect. The transceiver module is configured to receive a third signal in a first frequency band, and receive fourth signals in M inconsecutive second frequency bands. The processing module is configured to perform sensing processing based on the third signal and the fourth signals, where M is an integer greater than or equal to 2.

In a possible design solution, a bandwidth of the first frequency band is greater than a bandwidth of any one of the M second frequency bands.

In a possible design solution, the processing module is specifically configured to perform, based on the third signal and the fourth signals, sensing processing for coherently combining the M second frequency bands.

Optionally, the processing module is specifically configured to determine respective system delays of at least two of the M second frequency bands and/or a phase difference between the at least two second frequency bands based on the third signal and the fourth signals; and perform, based on the respective system delays of the at least two second frequency bands and/or the phase difference between the at least two second frequency bands, sensing processing for coherently combining the at least two second frequency bands.

In a possible design solution, the transceiver module is further configured to receive capability information from the first communication apparatus. The capability information indicates frequency bands supported by the first communication apparatus, and the frequency bands supported by the first communication apparatus include the first frequency band and the M second frequency bands.

Optionally, the processing module is further configured to control the transceiver module to send first configuration information to the first communication apparatus, where the first configuration information may indicate the first communication apparatus to send a signal in the first frequency band.

Further, the first configuration information may include at least one of the following: a frequency of the first frequency band, a bandwidth of the first frequency band, or a period for sending a signal by the first communication apparatus in the first frequency band.

Further, the processing module is further configured to: when the M second frequency bands cannot be coherently combined, control the transceiver module to send the first configuration information to the first communication apparatus.

Optionally, the processing module is further configured to control the transceiver module to send second configuration information to the first communication apparatus. The second configuration information may indicate the first communication apparatus to send signals in the M second frequency bands.

Further, the second configuration information includes at least one of the following: a frequency of each of the M second frequency bands, a bandwidth of each of the M second frequency bands, or a period for sending signals by the first communication apparatus in the M second frequency bands.

Further, the processing module is further configured to: when a quantity of scattering points observed in the first frequency band is greater than a preset threshold, control the transceiver module to send the second configuration information to the first communication apparatus, to trigger the first communication apparatus to send signals in the M second frequency bands. Alternatively, in another possible design solution, the processing module is further configured to control the transceiver module to send capability information to the third communication apparatus. The capability information may indicate frequency bands supported by the communication apparatus according to the fifth aspect, and the frequency bands supported by the communication apparatus according to the fifth aspect include the first frequency band and the M second frequency bands.

Optionally, the transceiver module is further configured to receive third configuration information from the third communication apparatus, where the third configuration information indicates the communication apparatus according to the fifth aspect to receive a signal in the first frequency band.

Further, the third configuration information may include at least one of the following: a frequency of the first frequency band, a bandwidth of the first frequency band, or a period for receiving a signal by the communication apparatus according to the fifth aspect in the first frequency band. Optionally, the transceiver module is further configured to receive fourth configuration information from the third communication apparatus, where the fourth configuration information indicates the communication apparatus according to the fifth aspect to receive signals in the M second frequency bands.

Further, the fourth configuration information includes at least one of the following: a frequency of each of the M second frequency bands, a bandwidth of each of the M second frequency bands, or a period for receiving signals by the communication apparatus according to the fifth aspect in the M second frequency bands.

In a possible design solution, the fourth signals received in the M second frequency bands include an $i^{th}$ fourth signal and a $j^{th}$ fourth signal, the $i^{th}$ fourth signal is a signal received in an $i^{th}$ second frequency band, the $j^{th}$ fourth signal is a signal received in a $j^{th}$ second frequency band, i and j are different, and i and j are any integers from 1 to M. The at least two second frequency bands include the $i^{th}$ second frequency band and the $j^{th}$ second frequency band. In this case, the processing module is specifically configured to determine respective delays of N scattering points based on the third signal, and determine a phase difference between the $i^{th}$ second frequency band and the $j^{th}$ second frequency band and/or system delays based on the respective delays of the N scattering points, a phase of the $i^{th}$ fourth signal, and a phase of the $j^{th}$ fourth signal. N is a positive integer, and the respective delays of the N scattering points are delays required for acting on (for example, in a mechanism such as reflection, diffraction, or scattering), by the N scattering points, a signal and then separately propagating the signal to the communication apparatus according to the fifth aspect after the signal is sent by the communication apparatus according to the fifth aspect or a communication apparatus other than the communication apparatus according to the fifth aspect. For example, at least one of the phase difference and the system delay, the respective delays of the N scattering points, the phase of the $i^{th}$ fourth signal, and the phase of the $j^{th}$ fourth signal satisfy the following relationship:

$$\phi_{i,j}^{l} = 2\pi(f_j - f_i)\tau^l + 2\pi(f_j\tau_j - f_i\tau_i) + \Delta\phi_{ij}.$$

$\phi_{i,j}^{l}$ is a difference between the phase of the $i^{th}$ fourth signal and the phase of the $j^{th}$ fourth signal, $f_i$ is a center frequency of the $i^{th}$ second frequency band, $f_j$ is a center frequency of the $j^{th}$ second frequency band, $\tau^l$ is a delay of an $l^{th}$ scattering point in the N scattering points, $l$ is any integer from 1 to N, $\tau_i$ is the first system delay, $\tau_j$ is the second system delay, and $\Delta\phi_{ij}$ is the phase difference.

Further, the phase difference may be a difference between a phase offset generated when the communication apparatus according to the fifth aspect and the first communication apparatus process a signal in the $i^{th}$ second frequency band and a phase offset generated when the communication apparatus according to the fifth aspect and the first communication apparatus process a signal in the $j^{th}$ second frequency band. The first system delay is a delay generated when the communication apparatus according to the fifth aspect and the first communication apparatus process a signal in the $i^{th}$ second frequency band. The second system delay is a delay generated when the communication apparatus according to the fifth aspect and the first communication apparatus process a signal in the $j^{th}$ second frequency band.

In a possible design solution, signal strength of a signal corresponding to the $l^{th}$ scattering point is greater than a strength threshold, signal strength of a signal corresponding to another scattering point is less than or equal to the strength threshold, and the another scattering point is a scattering point other than the $l^{th}$ scattering point in an $l^{th}$ range resolution unit in which the $l^{th}$ scattering point is located. In other words, in the $l^{th}$ range resolution unit, usually, the signal strength of only the $l^{th}$ scattering point is greater than the strength threshold, and the $l^{th}$ scattering point may be considered as an isolated point in the $l^{th}$ range resolution unit.

In a possible design solution, the processing module is specifically configured to coherently combine the $i^{th}$ second frequency band and the $j^{th}$ second frequency band based on the phase difference and/or the system delays, to obtain respective delays of K scattering points, where K is an integer greater than N, and the respective delays of the K scattering points may be delays required for acting (for example, in a mechanism such as reflection, diffraction, or scattering), by the K scattering points, on a signal and separately propagating the signal to the communication apparatus according to the fifth aspect after the signal is sent by another communication apparatus. In another possible implementation, the communication apparatus according to the fifth aspect includes a processing module and a transceiver module that are configured to perform the method according to the third aspect. The transceiver module is configured to receive capability information of a first communication apparatus, and the processing module is configured to control, based on the capability information of the first communication apparatus, the transceiver module to send first configuration information and second configuration information to the first communication apparatus. The capability information of the first communication apparatus indicates frequency bands supported by the first communication apparatus, the frequency bands supported by the first communication apparatus include a first frequency band and M inconsecutive second frequency bands, and M is an integer greater than or equal to 2. The first configuration information indicates the first communication apparatus to send a signal in the first frequency band, the second configuration information indicates the first communication apparatus to send signals in the M second frequency bands, and the signals in the first frequency band and the M second frequency bands are signals used for sensing.

In a possible design solution, the first configuration information includes at least one of the following: a frequency of the first frequency band, a bandwidth of the first frequency band, or a period for sending a signal by the first communication apparatus in the first frequency band.

In a possible design solution, the second configuration information includes at least one of the following: a frequency of each of the M second frequency bands, a bandwidth of each of the M second frequency bands, or a period for sending signals by the first communication apparatus in the M second frequency bands.

In a possible design solution, the transceiver module is further configured to receive capability information of a second communication apparatus. The capability information of the second communication apparatus indicates frequency bands supported by the second communication apparatus, and the frequency bands supported by the second communication apparatus includes the first frequency band and the M inconsecutive second frequency bands. The processing module is further configured to control, based on the capability information of the first communication apparatus and the capability information of the second communication apparatus, the transceiver module to send the first configuration information and the second configuration information to the first communication apparatus.

In another possible implementation, the communication apparatus according to the fifth aspect includes a processing module and a transceiver module that are configured to perform the method according to the fourth aspect. The transceiver module is configured to receive capability information of a second communication apparatus, and the processing module is configured to control, based on the capability information of the second communication apparatus, the transceiver module to send third configuration information and fourth configuration information to the second communication apparatus. The capability information of the second communication apparatus indicates frequency bands supported by the second communication apparatus, the frequency bands supported by the second communication apparatus include a first frequency band and M inconsecutive second frequency bands, and M is an integer greater than or equal to 2. The third configuration information indicates the second communication apparatus to receive a signal in the first frequency band, the fourth configuration information indicates the second communication apparatus to receive signals in the M second frequency bands, and the signals in the first frequency band and the M second frequency bands are signals used for sensing.

In a possible design solution, the third configuration information includes at least one of the following: a frequency of the first frequency band, a bandwidth of the first frequency band, or a period for receiving a signal by the second communication apparatus in the first frequency band. In a possible design solution, the fourth configuration information includes at least one of the following: a frequency of each of the M second frequency bands, a bandwidth of each of the M second frequency bands, or a period for receiving signals by the second communication apparatus in the M second frequency bands.

In a possible design solution, the transceiver module is further configured to receive capability information of a first communication apparatus. The capability information of the first communication apparatus indicates frequency bands supported by the first communication apparatus, and the frequency bands supported by the first communication apparatus include the first frequency band and the M inconsecutive second frequency bands. The processing module is further configured to control, based on the capability information of the first communication apparatus and the capability information of the second communication apparatus, the transceiver module to send the third configuration information and the fourth configuration information to the second communication apparatus.

Optionally, the transceiver module may include a sending module and a receiving module. The sending module is configured to implement the sending function of the communication apparatus according to the fifth aspect, and the receiving module is configured to implement the receiving function of the communication apparatus according to the fifth aspect.

Optionally, the communication apparatus according to the fifth aspect may further include a storage module, and the storage module stores a program or instructions. When the processing module executes the program or the instructions, the communication apparatus is enabled to perform the method according to any one of the first aspect to the fourth aspect.

It may be understood that the communication apparatus according to the fifth aspect may be a terminal or a network device, may be a chip (system) or another part or component that may be disposed in a terminal or a network device, or may be an apparatus that includes a terminal or a network device. This is not limited in this application.

In addition, for technical effects of the communication apparatus according to the fifth aspect, refer to the technical effects of the foregoing other aspects. Details are not described herein again. According to a sixth aspect, a communication apparatus is provided. The communication apparatus includes a processor, and the processor is configured to perform the method according to any one of the first aspect to the fourth aspect.

In a possible design solution, the communication apparatus according to the sixth aspect may further include a memory. The memory and the processor may be integrated together, or may be disposed separately. The memory may be configured to store a computer program and/or data in the method according to any one of the first aspect to the fourth aspect.

In a possible design solution, the communication apparatus according to the sixth aspect may further include a transceiver. The transceiver may be a transceiver circuit or an interface circuit. The transceiver may be used by the communication apparatus according to the fourth aspect to communicate with another communication apparatus.

In embodiments of this application, the communication apparatus according to the sixth aspect may be the terminal or the network device according to any one of the first aspect to the fourth aspect, a chip (system) or another part or component that may be disposed in the terminal or the network device, or an apparatus that includes the terminal or the network device.

In addition, for technical effects of the communication apparatus according to the sixth aspect, refer to the technical effects of the method according to any one of the first aspect to the fourth aspect. Details are not described herein again.

According to a seventh aspect, a communication apparatus is provided, including a processor and a memory. The memory is configured to store a computer program, and when the processor executes the computer program, the communication apparatus is enabled to perform the method according to any one of the first aspect to the fourth aspect.

In a possible design solution, the communication apparatus according to the seventh aspect may further include a transceiver. The transceiver may be a transceiver circuit or an interface circuit. The transceiver may be used by the communication apparatus according to the eighth aspect to communicate with another communication apparatus.

In embodiments of this application, the communication apparatus according to the seventh aspect may be the terminal or the network device according to any one of the first aspect to the fourth aspect, a chip (system) or another part or component that may be disposed in the terminal or the network device, or an apparatus that includes the terminal or the network device.

In addition, for technical effects of the communication apparatus according to the seventh aspect, refer to the technical effects of the method according to any one of the first aspect to the fourth aspect. Details are not described herein again.

According to an eighth aspect, a communication system is provided. The communication system includes a first communication apparatus configured to perform the method according to the first aspect, and a second communication apparatus configured to perform the method according to the second aspect.

Optionally, the communication system further includes a third communication apparatus configured to perform the method according to the third aspect or the fourth aspect.

According to a ninth aspect, a computer-readable storage medium is provided, including a computer program or instructions. When the computer program or the instructions are run on a computer, the computer is enabled to perform the method according to any one of the first aspect to the fourth aspect.

According to a tenth aspect, a computer program product is provided, including a computer program or instructions. When the computer program or the instructions are run on a computer, the computer is enabled to perform the method according to any one of the first aspect to the fourth aspect.

## BRIEF DESCRIPTION OF DRAWINGS

FIG. 1 is a diagram of a scenario of wireless sensing;
FIG. 2 is a diagram of a scenario of bistatic ranging;
FIG. 3 is a diagram of a scenario of monostatic ranging;
FIG. 4 is a diagram of a change in normalized power;
FIG. 5 is a diagram of single-frequency-band sensing and multi-frequency-band sensing;
FIG. 6 is a diagram of signal receiving and sending in multi-frequency-band sensing;
FIG. 7 is a diagram of an architecture of a communication system according to an embodiment of this application;
FIG. 8 is a schematic flowchart 1 of a communication method according to an embodiment of this application;
FIG. 9 is a schematic flowchart 2 of a communication method according to an embodiment of this application;
FIG. 10 is a diagram of an application scenario of a communication method according to an embodiment of this application;
FIG. 11 is a schematic flowchart 3 of a communication method according to an embodiment of this application;
FIG. 12 is a schematic flowchart 4 of a communication method according to an embodiment of this application;
FIG. 13 is a diagram 1 of a structure of a communication apparatus according to an embodiment of this application; and
FIG. 14 is a diagram 2 of a structure of a communication apparatus according to an embodiment of this application.

## DESCRIPTION OF EMBODIMENTS

For ease of understanding, the following first describes technical terms in embodiments of this application.

1. Carrier aggregation (carrier aggregation, CA):

To provide a higher communication rate, the 3rd generation partnership project (the 3rd Generation Partnership Project, 3GPP) requires a downlink rate of 1 gigabit per second (Gbit/s) in a long term evolution-advanced (long term evolution-advanced, LTE-advanced) phase. Due to factors such as a shortage of radio spectrum resources, spectrum resources used by an operator are inconsecutive, and each single frequency band cannot satisfy a bandwidth requirement in long term evolution-advanced. For the foregoing reason, the 3GPP introduces CA in an R10 phase. A plurality of consecutive or inconsecutive carriers (component carrier, CC) are aggregated into a larger bandwidth to improve a communication throughput and satisfy the requirement of the 3GPP.

2. ISAC:

In recent years, wireless sensing technologies have attracted wide attention from the industry and academia. In the wireless sensing technology, a characteristic of a signal propagation space (channel) is obtained by analyzing a change of a radio signal during propagation, to implement scene sensing. The scene herein includes factors of a target (whether there is a position, a posture, an action, or the like of the target), and include other external factors (such as a building and a moving vehicle). For example, radar is one of the most classic wireless sensing means, and is widely used in fields such as agriculture and meteorology. A basic principle of the radar is that a transmitter transmits a specific waveform signal, the specific waveform signal is received by a receiver through a wireless channel, and signal processing is performed based on the transmitted signal and the received signal, so that a target of interest is extracted from the wireless channel. A main function of wireless communication is to exchange information between a receiver and a transmitter. A basic principle of the wireless communication is also that a transmit end transmits a specific waveform signal, the specific waveform signal is received by a receiver through a wireless channel, and after signal processing, the signal transmitted by the transmit end is obtained through demodulation. It can be learned that, for an entire physical process of transmission, transfer, and reception, a process of wireless sensing is relatively similar to a process of wireless communication. Therefore, in a process of evolution from 5G to a 5G-advanced technology and a future 6G network, ISAC that integrates wireless communication and wireless sensing, or referred to as joint sensing (joint communications and sensing, JCS/JCAS), that is, an integrated sensing and communication technology, is considered as one of key technologies that can extend a service capability of a mobile communication network. A core idea of the technology is to add a sensing capability to a mobile communication network, and construct a capability of detecting, tracking, and imaging a target, so that communication and sensing capabilities are integrated into one network, thereby achieving harmonious coexistence and even mutual benefit and reciprocity.

Usually, ISAC may have two modes: monostatic sensing and bistatic sensing. The monostatic sensing means that a transmit end and a receive end of a sensing signal are a same device. In a procedure for the sensing signal, a sensing station not only needs to send the sensing signal, but also needs to receive a signal obtained after a target surface acts on (for example, reflects, diffracts, or scatters) the sensing signal. Therefore, the monostatic sensing mode is also referred to as a self-sending and self-receiving mode. For the bistatic sensing, a transmit end and a receive end of a sensing signal are two devices with different spatial positions. In a procedure for the sensing signal, after a sensing station A sends the sensing signal, a signal obtained after a target surface acts on (for example, reflects, diffracts, or scatters) the signal is received by a sensing station B. Therefore, the bistatic sensing mode is also referred to as a mode of sending by A and receiving by B.

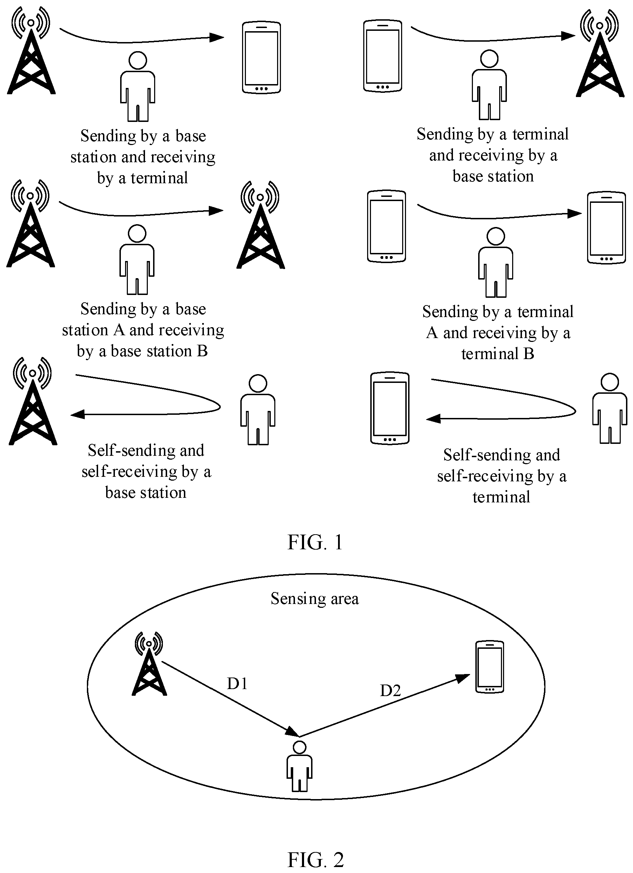

As shown in FIG. 1, there may be the following six sensing modes:

(1) Sending by a base station (base station) and receiving by a terminal: The base station serves as a transmit end and a control end, and the terminal serves as a receive end. A sensing signal is sent by the base station. After the sensing signal is reflected by a target (such as a bicycle or an automobile) in an environment, an echo signal is received and processed by the terminal to obtain a sensing result, for example, information such as a distance, a speed, an angle, and strength of the target.

(2) Sending by a terminal and receiving by a base station: The terminal serves as a transmit end, and the base station serves as a receive end and a control end. A sensing signal is sent by the terminal. After the sensing signal is reflected by a target in an environment, an echo signal is received and processed by the base station to obtain a sensing result.

(3) Sending by a base station A and receiving by a base station B: The base station A serves as a transmit end and a control end, and the base station B serves as a receive end. A sensing signal is sent by the base station A. After the sensing signal is reflected by a target in an environment, an echo signal is received and processed by the base station B to obtain a sensing result. Optionally, there may further be a base station C. In this case, the base station A may serve as only a transmit end, and the base station C may serve as a control end.

(4) Sending by a terminal A and receiving by a terminal B: The terminal A serves as a transmit end and a control end, and the terminal B serves as a receive end. A sensing signal is sent by the terminal A. After the sensing signal is reflected by a target in an environment, an echo signal is received and processed by the terminal B to obtain a sensing result.

(5) Self-sending and self-receiving by a base station: The base station serves as a transmit end, a receive end, and a control end. A sensing signal is sent by the base station. After the sensing signal is reflected by a target in an environment, an echo signal is received and processed by the base station to obtain a sensing result.

(6) Self-sending and self-receiving by a terminal: The terminal serves as a transmit end, a receive end, and a control end. A sensing signal is sent by the terminal. After the sensing signal is reflected by a target in an environment, an echo signal is received and processed by the terminal to obtain a sensing result.

Ranging is used as an example:

Ranging is to measure a distance of transmitter->target->receiver by using a radio signal. As shown in FIG. 2, based on whether a transmitter and a receiver are at a same position, ranging may be classified into two modes: bistatic ranging (that is, an implementation of bistatic sensing) and monostatic ranging (that is, an implementation of monostatic sensing). In the bistatic ranging mode, a distance obtained through measurement is D=D1+D2. In the monostatic ranging mode, a distance obtained through measurement is D. In the two ranging modes, range resolution units corresponding to bistatic and monostatic are respectively c/B and c/2B, where $c \approx 3 \times 10^8$ meters per second (m/s), and represents a speed of light in vacuum, and B represents a bandwidth of a signal.

It can be learned that a larger bandwidth indicates a smaller range resolution unit, higher range resolution, and a stronger resolution capability.

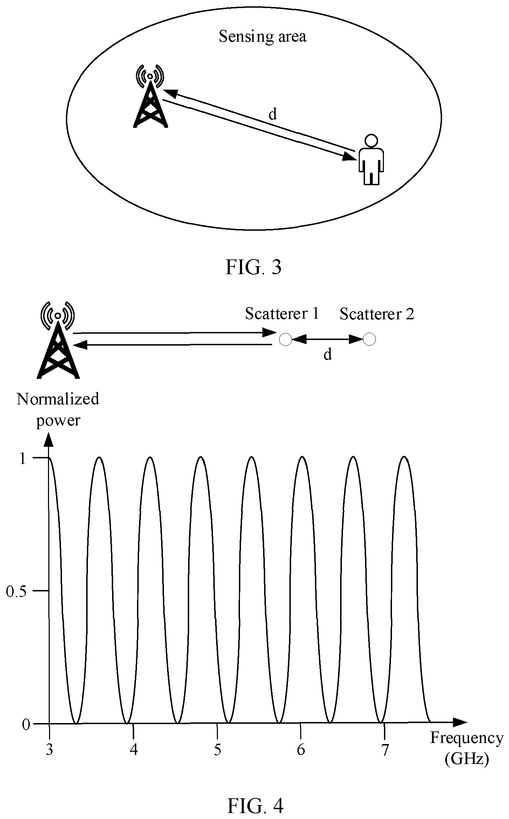

A plurality of scattering points on a target may be measured through sensing. There is a delay difference between signals on which the plurality of scattering points act (for example, perform reflection, diffraction, or scattering), and the delay difference may also be represented as a phase difference between the signals. In a monostatic ranging scenario shown in FIG. 3, it is assumed that a spacing between scattering points is d, a delay difference between signals on which two scattering points act (for example, perform reflection, diffraction, and scattering) is $\Delta\tau = 2d/c$, c is a speed of light, and a corresponding phase difference is $\Delta\Phi = 2\pi f\Delta\tau = 4\pi d/\lambda$, where $\lambda = c/f$ represents a signal wavelength. If signals reflected by the two scattering points are respectively represented as s1(t) and s2(t), a received signal at a receive end is actually a signal obtained by superposing s1(t) and s2(t), for example, s(t)=s1(t)+s2(t).

If signal amplitudes of s1(t) and s2(t) are the same, and there is a phase difference $\Delta\Phi$ between s2(t) and s1(t), s(t) may be represented as the following Formula (1), and power P of s(t) may be represented as the following Formula (2):

$$s(t) = s_1(t) + s_2(t) = \left(1 + e^{j\Delta\Phi}\right)s_1(t) \quad (1)$$

$$P = \left|1 + e^{j\Delta\Phi}\right|^2 P_1 \quad (2)$$

As shown in FIG. 4, the power P is normalized to obtain normalized power, which fluctuates with a frequency change of the received signal. At some frequencies, the power P is very low, and severe fading occurs. In addition, when the phase difference between s1(t) and s2(t) is 180 degrees, power of sl(t) and s2(t) cancel each other, and energy of the received signal is the lowest.

In a relatively ideal case, it is assumed that there are M scattering points in total on an observation target, and M is a positive integer. If range resolution is high enough, the M scattering points can be resolved. If an RCS of an $m^{th}$ scattering point is $\sigma_m$, where m traverses from 1 to M, power of a received signal corresponding to the $m^{th}$ scattering point detected by the receive end may be $P_r \propto \sum_{m=1}^{M} \sigma_m$, that is, the power is directly proportional to the RCS. However, in an actual case, the range resolution is limited by a bandwidth, and one range resolution unit may include a plurality of scattering points. In this case, power $P_{r_i}$ of a received signal detected on an $i^{th}$ range resolution unit may be represented as the following Formula (3):

$$P_{r_i} \propto \left|\sum_{j=1}^{n_i} \sqrt{\sigma_j} \exp\left(\Delta\Phi_j\right)\right|^2 \quad (3)$$

In this case, because phases corresponding to the plurality of scattering points may be different, or may even be reverse, energy after superposition of signals corresponding to the plurality of scattering points is reduced, that is, RCS fading occurs.

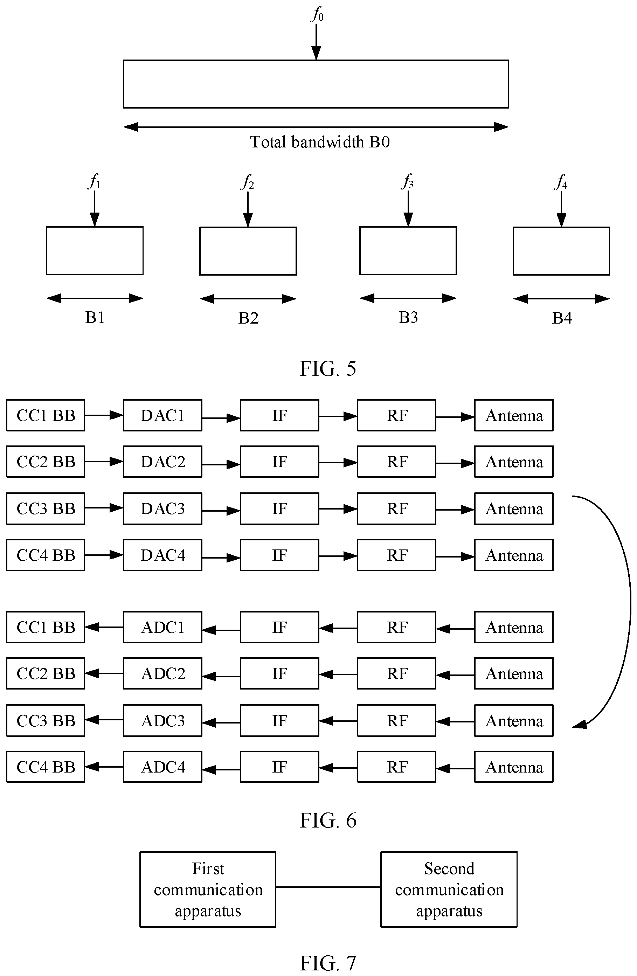

A sensing signal may be sent in a plurality of manners. For example, one manner is sending the sensing signal in a single continuous frequency band, which is also referred to as single-frequency-band sensing. Another manner is sending the sensing signal in a plurality of inconsecutive (or discrete) frequency bands, which is also referred to as multi-frequency-band sensing. As shown in FIG. 5, a total bandwidth corresponding to a sensing signal is B0 (a center frequency is $f_0$). The total bandwidth B0 may be allocated to a single frequency band, and this is single-frequency-band sensing. Alternatively, the total bandwidth B0 may be allocated to a plurality of discrete frequency bands, and this is multi-frequency-band sensing, for example, a bandwidth B1 (a center frequency is $f_1$), a bandwidth B2 (a center frequency is $f_2$), a bandwidth B3 (a center frequency is $f_3$), and a bandwidth B4 (a center frequency is $f_4$). For single-frequency-band sensing, a bandwidth of a single frequency band is larger than a bandwidth of each frequency band in a plurality of frequency bands. Therefore, range resolution is higher, and compared with multi-frequency-band sensing, the single-frequency-band sensing can resolve more scattering points. However, because the range resolution is higher, that is, a distance d between two scattering points that can be resolved is smaller, a phase change rate of a sensing signal is relatively low, and the scattering point may still be in an RCS fading area in a corresponding range resolution unit, resulting in missing detection of the scattering point. For multi-frequency-band sensing, a probability that RCS fading simultaneously occurs at a same scattering point in a plurality of frequency bands is relatively low. However, because a bandwidth of each frequency band is relatively small, range resolution is lower, and more scattering points cannot be resolved.

It may be understood that, according to the foregoing CA related description, if a plurality of frequency bands can be coherently combined to achieve higher range resolution, more scattering points can be resolved, and sensing performance can be improved. However, because there is a phase difference between sensing signals in the plurality of frequency bands, the frequency bands cannot be coherently combined. For example, as shown in FIG. 6, carrier component CC1 (Carrier component)-baseband (baseband, BB) represents a baseband signal corresponding to a $1^{st}$ subband, CC2-BB represents a baseband signal corresponding to a $2^{nd}$ subband, and so on. A transmit end performs digital-to-analog conversion (digital-to-analog convertor, DAC) on the baseband signal to obtain an analog signal. The analog signal is converted into an intermediate frequency (intermediate frequency, IF) signal through frequency conversion. The IF signal is then converted into a radio frequency (radio frequency, RF) signal through up-conversion. The radio frequency signal is sent through an air interface after passing through an antenna. A receive end receives the RF signal through the antenna, obtains the IF signal through down-conversion, and then obtains the baseband signal through analog-to-digital conversion (analog-to-digital convertor, ADC) sampling. It can be learned that different subbands experience DAC, ADC, up-conversion, down-conversion, and RF processing through different modules/circuits, and phases and system delays of the different modules/circuits may not be completely consistent. Consequently, signals corresponding to the different subbands have a phase difference and a delay difference.

RFs and antennas corresponding to different CCs in FIG. 6 may be the same, or may be different. This is not limited.

For example, a $k^{th}$ subband uses the $1^{st}$ subband as a reference, and k is an integer greater than 1. A phase of a sensing signal S1 received at the center frequency of the $1^{st}$ subband is $2\pi f_1\tau + 2\pi f_1\tau_1$, and a phase of a sensing signal Sk received at a center frequency of the $k^{th}$ subband is $2\pi f_k\tau + \pi f_k\tau_k + \Delta\phi_k$. $f_1$ is the center frequency of the $1^{st}$ subband, $f_k$ is the center frequency of the $k^{th}$ subband, $\tau$ is an air interface transmission delay caused by a same scattering point, for example, a delay required for transmitting a sensing signal from the transmit end to the scattering point and scattering the sensing signal from the scattering point to the receive end, $\Delta\phi_k$ is a phase difference between the $k^{th}$ subband and the $1^{st}$ subband, $\tau_1$ is a system delay of the $1^{st}$ subband, and $\tau_k$ is a system delay of the $k^{th}$ subband. In this case, a phase difference between the two sensing signals is $2\pi(f_k - f_1)\tau + 2\pi f_k\tau_k - 2\pi f_1\tau_1 + \Delta\phi_k$. If the two subbands have no phase difference or system delay, the two subbands may be combined into a large bandwidth, so that an air interface transmission delay of a scattering point may be determined by measuring the phase difference between the two sensing signals. However, because a phase difference between different subbands and a system delay are unknown, the different subbands cannot be combined into a large bandwidth, the air interface transmission delay cannot be determined, and ranging cannot be implemented. Therefore, how to aggregate different subbands together to increase an effective bandwidth of sensing to improve range resolution is a problem worthy of study.

For the foregoing technical problems, embodiments of this application provide the following technical solutions.

The following describes technical solutions of this application with reference to accompanying drawings.

The technical solutions in embodiments of this application may be applied to various communication systems, such as a wireless network (Wi-Fi) system, an ultra-wideband (Ultra-wideband, UWB) system, a vehicle-to-everything (vehicle-to-everything, V2X) communication system, a device-to-device (device-to-device, D2D) communication system, an internet of vehicles communication system, a 4th generation (4th generation, 4G) mobile communication system like a long term evolution (long term evolution, LTE) system, a worldwide interoperability for microwave access (worldwide interoperability for microwave access, WiMAX) communication system, 5G like an NR system, and a future communication system (5.5G or 6G).

In embodiments of this application, "indication" may include a direct indication and an indirect indication, or may include an explicit indication and an implicit indication. Information indicated by a specific piece of information (for example, the following first indication information, second indication information, or third indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement order of a plurality of pieces of information that is pre-agreed on (for example, stipulated in a protocol), to reduce indication overheads to some extent. In addition, a common part of information may be identified and indicated in a unified manner, to reduce indication overheads caused by separately indicating same information.

Further, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periods and/or sending occasions of the sub-information may be the same or may be different. A specific sending method is not limited in embodiments of this application. The sending periods and/or the sending occasions of the sub-information may be predefined, for example, predefined according to a protocol, or may be configured by a transmit end device by sending configuration information to a receive end device.

"Predefinition" or "preconfiguration" may be implemented by pre-storing corresponding code or a corresponding table in a device, or may be implemented in another manner that may be used for indicating related information. A specific implementation thereof is not limited in embodiments of this application. "Storing" may mean storing in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in embodiments in this application.

The "protocol" in embodiments of this application may be a protocol family in the communication field, a standard protocol with a frame structure similar to that of a protocol family, or a related protocol applied to a future communication system. This is not specifically limited in embodiments of this application.

In embodiments of this application, descriptions such as "when ...", "in a case of ...", and "if" all mean that a device performs corresponding processing in a specific objective situation, and are not intended to limit time. The descriptions do not mean that the device is required to have a determining action during implementation, and do not mean any other limitation.

In the descriptions of embodiments of this application, unless otherwise specified, "/" represents an "or" relationship between associated objects. For example, A/B may represent A or B. "And/or" in embodiments of this application describes only an association relationship of associated objects and represents that three relationships may exist. For example, A and/or B may represent the following three cases: Only A exists, both A and B exist, and only B exists. A and B may be singular or plural. In addition, in the descriptions of embodiments of this application, unless otherwise specified, "a plurality of" means two or more. "At least one of the following items (pieces)" or a similar expression thereof means any combination of these items, including a single item (piece) or any combination of a plurality of items (pieces). For example, at least one (piece) of a, b, or c may represent a, b, c, a and b, a and c, b and c, or a, b, and c, where a, b, and c may be singular or plural. In addition, for ease of clearly describing the technical solutions in embodiments of this application, the words such as "first" and "second" are used to distinguish between same or similar items whose functions are basically the same in embodiments of this application. A person skilled in the art may understand that the words such as "first" and "second" do not limit a quantity or an execution order, and the words such as "first" and "second" do not necessarily indicate a specific difference. In addition, in embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present a related concept in a specific manner for ease of understanding.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

For ease of understanding of embodiments of this application, a communication system shown in FIG. 7 is used as an example to first describe in detail a communication system applicable to embodiments of this application. For example, FIG. 7 is a diagram of an architecture of a communication system to which a communication method according to an embodiment of this application is applicable.

As shown in FIG. 7, the communication system may include at least one communication apparatus, for example, a first communication apparatus and a second communication apparatus. The first communication apparatus and the second communication apparatus may be different communication apparatuses. This is the foregoing scenario of sending by A and receiving by B. The first communication apparatus and the second communication apparatus may be a same communication apparatus. This is the foregoing scenario of self-sending and self-receiving.

The first communication apparatus or the second communication apparatus may be a terminal or a network device.

The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having wireless sending and receiving functions, a virtual reality (virtual reality, VR) terminal, an augmented reality (augmented reality, AR) terminal, a smart home device (for example, a refrigerator, a television set, an air conditioner, or an electricity meter), a smart robot, a robot arm, a workshop device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) or the like having a terminal function, a flight device (for example, a smart robot, a hot air balloon, an uncrewed aerial vehicle, or an airplane), or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units. Alternatively, the terminal device may be another device that has a terminal function. For example, the terminal device may be a device that functions as a terminal in D2D communication.

A device form of the terminal is not limited in embodiments of this application. An apparatus configured to implement a function of the terminal may be a terminal, or may be an apparatus, for example, a chip system, that can support the terminal in implementing the function. The apparatus can be installed in the terminal, or can match the terminal for use. In embodiments of this application, the chip system may include a chip, or may include a chip and another discrete component.

The network device may be a radio access network (radio access network, RAN) device, which is also referred to as an access network apparatus. The access network apparatus may be specifically an access network device like a 6G base station in a next-generation mobile communication system, for example, 6G. Alternatively, in the next-generation mobile communication system, the access network apparatus may be named in another manner. All naming manners fall within the protection scope of embodiments of this application. This is not limited in this application. Alternatively, the access network apparatus may include a gNB in 5G, for example, in a new radio (new radio, NR) system, or one antenna panel or a group of antenna panels (including a plurality of antenna panels) of a base station in 5G, or may be a network node that forms a gNB, a transmission point (transmission and reception point, TRP, or transmission point, TP), or a transmission measurement function (transmission measurement function, TMF), for example, a central unit (central unit, CU), a distributed unit (distributed unit, DU), a CU-control plane (control plane, CP), a CU-user plane (user plane, UP), or a radio unit (radio unit, RU), an RSU having a base station function, a wired access gateway, or a 5G core network element. Alternatively, the access network apparatus may include an access point (access point, AP) in a wireless fidelity (wireless fidelity, Wi-Fi) system, a wireless relay node, a wireless backhaul node, various forms of macro base stations, a micro base station (also referred to as a small cell), a relay station, an access point, a wearable device, a vehicle-mounted device, or the like.

The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of the software module and the hardware module.

In a communication system, for a same sensed target object, a first communication apparatus may serve as a control end, and separately use single-frequency-band sensing (for example, sending a first signal in a first frequency band) and multi-frequency-band sensing (for example, sending second signals in M inconsecutive second frequency bands). In this way, a device (such as a second communication apparatus) that receives a signal may use a sensing result of single-frequency-band sensing to coherently combine a plurality of frequency bands for multi-frequency-band sensing, so as to obtain a sensing result with higher precision.

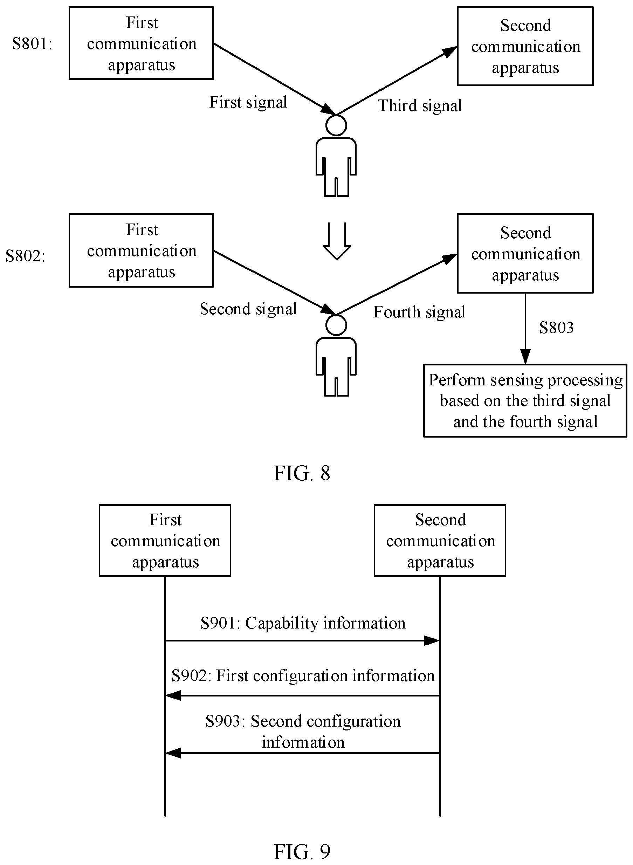

FIG. 8 is a schematic flowchart of a communication method according to an embodiment of this application. The communication method is applicable to the foregoing communication system, and mainly relates to interaction between a first communication apparatus and a second communication apparatus.

As shown in FIG. 8, a procedure of the communication method is as follows.

S801: The first communication apparatus sends a first signal in a first frequency band. Correspondingly, the second communication apparatus receives a third signal in the first frequency band.

Frequency domain resources of the first frequency band are consecutive, and a bandwidth of the first frequency band is larger than a bandwidth of the following second frequency band. Compared with sensing performed by using the second frequency band, sensing performed by using the first frequency band can have higher sensing precision, or higher range resolution. The first frequency band may be a frequency band supported by both the first communication apparatus and the second communication apparatus. The first communication apparatus and the second communication apparatus may use the first frequency band by default (for example, as defined in a protocol), or another apparatus may indicate the first communication apparatus and the second communication apparatus to use the first frequency band for signal receiving and sending. For details, refer to the following related descriptions for signal receiving and sending. Details are not described herein. Both the first signal and the third signal may be signals used for sensing, and may also be referred to as sensing signals, or may have any other possible names. This is not limited. A difference lies in that the first signal is a signal transmitted by the first communication apparatus, and the third signal is an echo signal obtained after a sensing target acts on the first signal, and may be specifically a signal formed after a scattering point in space acts on (for example, reflects, diffracts, or scatters) the first signal during transmission. The scattering point is a group of action points on the sensing target (for example, a vehicle) in space, and may be specifically an action point that can act on, for example, transmit, diffract, or scatter, an electromagnetic wave transmitted in space, so that a signal is received by a receive end. The first signal may be used to determine a delay of the scattering point. To be specific, the second communication apparatus may determine respective delays of N scattering points based on the received third signal, where N is a positive integer. The N scattering points may be distributed in a plurality of range resolution units. To be specific, the second communication apparatus may observe at least one scattering point in one range resolution unit, and observe a total of N scattering points. The respective delays of the N scattering points may be delays required for separately propagating a signal to the second communication apparatus through the N scattering points after the signal is sent by the second communication apparatus or a communication apparatus (for example, the first communication apparatus) other than the second communication apparatus.

For ease of understanding, an $l^{th}$ scattering point in the N scattering points is used as an example, where $l$ is any integer from 1 to N.

Time required for transmitting the first signal by the first communication apparatus and propagating the first signal to the $l^{th}$ scattering point is $\tau_{l1}$, and time required for propagating the third signal scattered by the $l^{th}$ scattering point from the $l^{th}$ scattering point to the second communication apparatus is $\tau_{l2}$. In this case, a delay of the $l^{th}$ scattering point is $\tau_l = \tau_{l1} + \tau_{l2}$. The second communication apparatus may determine the delay of the $l^{th}$ scattering point based on a moment at which the first communication apparatus transmits the first signal and a moment at which the second communication apparatus receives the third signal scattered by the $l^{th}$ scattering point.

It may be understood that signal strength of a signal (that is, the third signal) corresponding to the $l^{th}$ scattering point is greater than a strength threshold, signal strength corresponding to another scattering point is less than or equal to the strength threshold, and the another scattering point may be a scattering point other than the $l^{th}$ scattering point in an $l^{th}$ range resolution unit in which the $l^{th}$ scattering point is located. In other words, in the $l^{th}$ range resolution unit, usually, the signal strength of only the $l^{th}$ scattering point is greater than the strength threshold, and the $l^{th}$ scattering point may be considered as an isolated point or a strong scattering point in the $l^{th}$ range resolution unit. When the second communication apparatus observes the $l^{th}$ scattering point in the $l^{th}$ range resolution unit, energy of the $l^{th}$ scattering point may be dominant, so that the scattering point can be accurately measured. Therefore, the N scattering points are all isolated points in respective range resolution units. Certainly, there may be no other scattering point in the $l^{th}$ range resolution unit, and there is only the $l^{th}$ scattering point.

Actually, the second communication apparatus can further observe scattering points other than the N scattering points based on the third signal. Signal strength corresponding to these scattering points is less than or equal to the strength threshold, or these scattering points are a plurality of scattering points whose signal strength is greater than the strength threshold in a same range resolution unit. In other words, after observing the plurality of scattering points based on the third signal, the second communication apparatus may determine isolated points in the range resolution unit from the plurality of scattering points, so that coherent combination can be performed subsequently (for example, in S802) by using delays of these isolated points.

It may be further understood that the second communication apparatus may further determine parameters such as a position, a movement direction, and a movement speed of the $l^{th}$ scattering point. For details, refer to related descriptions in "Skolnik M 1. Radar handbook[J]. 1970.". Details are not described herein.

S802: The first communication apparatus sends second signals in M inconsecutive second frequency bands. Correspondingly, the second communication apparatus receives fourth signals in the M inconsecutive second frequency bands.

Frequency domain resources of each second frequency band are consecutive, and frequency domain resources of different second frequency bands are inconsecutive. For example, frequency domain resources included in a second frequency band #1 are a frequency #1 to a frequency #2, frequency domain resources included in a second frequency band #2 are a frequency #3 to a frequency #4, and there is further a frequency domain resource between the frequency #2 and the frequency #3. In other words, the second frequency band #1 and the second frequency band #2 are inconsecutive frequency bands. A bandwidth of each second frequency band may be relatively small, for example, less than the bandwidth of the first frequency band. Therefore, a requirement for consecutive frequency domain resources is low, provided that it is ensured that a current frequency domain resource can satisfy a bandwidth requirement of each second frequency band. The first communication apparatus and the second communication apparatus may use the M second frequency bands by default for signal receiving and sending, or another apparatus may indicate the first communication apparatus and the second communication apparatus to use the M second frequency bands for signal receiving and sending. For details, refer to the following related descriptions. Details are not described herein.

Both the second signal and the fourth signal may be signals used for sensing, and may also be referred to as sensing signals, or may have any other possible names. This is not limited. A difference lies in that the second signal is a signal transmitted by the first communication apparatus, and the fourth signal is an echo signal obtained after a sensing target acts on the second signal, and may be specifically a signal formed after a scattering point in space acts on (for example, reflects, diffracts, or scatters) the second signal during transmission. The second signals may be used to coherently combine at least two of the M second frequency bands, that is, the second communication apparatus may coherently combine at least two of the M second frequency bands based on the received fourth signals. Details are described below in S803.

S803: The second communication apparatus performs sensing processing based on the third signal and the fourth signals.

The second communication apparatus may perform, based on the third signal and the fourth signals, sensing processing for coherently combining the M second frequency bands, for example, coherently combining the M second frequency bands into a frequency band with a bandwidth larger than that of the first frequency band, so that a sensing capability can be enhanced, and sensing performance can be improved. For example, the second communication apparatus may determine respective system delays of at least two of the M second frequency bands and/or a phase difference between the at least two second frequency bands based on the third signal and the fourth signals. Then, the second communication apparatus performs, based on the respective system delays of the at least two second frequency bands and/or the phase difference between the at least two second frequency bands, sensing processing for coherently combining the at least two second frequency bands.

It may be understood that a phase difference may be generated when signals in different second frequency bands are processed by different system hardware in a receiving and sending process, and different system hardware may generate different system delays. Therefore, as long as a phase difference between two different frequency bands and respective system delays of the frequency bands can be determined, calibration of a phase and/or a system delay can be implemented, so that the two different frequency bands are coherently combined, to improve sensing performance.

Optionally, the at least two second frequency bands may include an $i^{th}$ second frequency band and a $j^{th}$ second frequency band. For ease of understanding, the following uses coherent combination of the $i^{th}$ second frequency band and the $j^{th}$ second frequency band as an example for description. It is assumed that the fourth signals received in the M second frequency bands include an $i^{th}$ fourth signal and a $j^{th}$ fourth signal, the $i^{th}$ fourth signal is a signal received in the $i^{th}$ second frequency band, the $j^{th}$ fourth signal is a signal received in the $j^{th}$ second frequency band, i and j are different, and i and j are any integers from 1 to M.

The second communication apparatus may determine a phase difference between the $i^{th}$ second frequency band and the $j^{th}$ second frequency band and/or system delays based on the respective delays of the N scattering points, a phase of the $i^{th}$ fourth signal, and a phase of the $j^{th}$ fourth signal. In a scenario of sending by A and receiving by B, different communication apparatuses (that is, the first communication apparatus and the second communication apparatus are different apparatuses) may form a transceiver system. Alternatively, in a scenario of self-sending and self-receiving, a same communication apparatus (that is, the first communication apparatus and the second communication apparatus are a same apparatus) may form a transceiver system. Therefore, the phase difference between the $i^{th}$ second frequency band and the $j^{th}$ second frequency band may be a difference between a phase offset generated when the transceiver system processes a signal in the $i^{th}$ second frequency band and a phase offset generated when the transceiver system processes a signal in the $j^{th}$ second frequency band. For a specific implementation principle, refer to related descriptions in FIG. 6. Details are not described herein again. The system delays may include a first system delay and a second system delay. The first system delay may be a delay generated when the transceiver system processes a signal in the $i^{th}$ second frequency band. Similarly, the second system delay may be a delay generated when the transceiver system processes a signal in the $j^{th}$ second frequency band. For a specific implementation principle, refer to related descriptions in FIG. 6. Details are not described herein again.

For example, at least one of the phase difference between the $i^{th}$ second frequency band and the $j^{th}$ second frequency band and the system delay, the respective delays of the N scattering points, the phase of the $i^{th}$ fourth signal, and the phase of the $j^{th}$ fourth signal may satisfy a relationship shown in the following Formula (4):

$$\phi_{i,j}^{l} = 2\pi(f_j - f_i)\tau^l + 2\pi(f_j\tau_j - f_i\tau_i) + \Delta\phi_{ij} \quad (4)$$

In the foregoing Formula (4), $\phi_{i,j}^{l}$ may be a difference between a phase of an $i^{th}$ fourth signal corresponding to the $l^{th}$ scattering point and a phase of a $j^{th}$ fourth signal corresponding to the $l^{th}$ scattering point. The $i^{th}$ fourth signal corresponding to the $l^{th}$ scattering point may be understood as that the $i^{th}$ fourth signal is a signal passing through the $l^{th}$ scattering point, and the second communication apparatus may obtain the phase of the $i^{th}$ fourth signal through measurement. Similarly, the $j^{th}$ fourth signal corresponding to the $l^{th}$ scattering point may be understood as that the $j^{th}$ fourth signal is a signal passing through the $l^{th}$ scattering point, and the second communication apparatus may obtain the phase of the $j^{th}$ fourth signal through measurement.

In the foregoing Formula (4), $f_i$ may be a center frequency of the $i^{th}$ second frequency band. It may be understood that the second communication apparatus may receive, at the center frequency of the $i^{th}$ second frequency band, the $i^{th}$ fourth signal corresponding to the $l^{th}$ scattering point, and the center frequency may be replaced with any possible frequency of the $i^{th}$ second frequency band. This is not limited. Similarly, $f_j$ may be a center frequency of the $j^{th}$ second frequency band. It may be understood that the second communication apparatus may receive, at the center frequency of the $j^{th}$ second frequency band, the $j^{th}$ fourth signal corresponding to the $l^{th}$ scattering point, and the center frequency may be replaced with any possible frequency of the $j^{th}$ second frequency band. This is not limited.

In the foregoing Formula (4), $\tau^l$ may be a delay of the $l^{th}$ scattering point in the N scattering points, and may be the delay determined in S801, or may be a delay predicted by the second communication apparatus. For example, the second communication apparatus can obtain a position, a movement direction, a movement speed, and the like of the $l^{th}$ scattering point through measurement in S801. Based on this, the second communication apparatus can estimate, based on a time difference between receiving the third signal and receiving the fourth signal, a position to which the $l^{th}$ scattering point may move, and estimate the delay of the $l^{th}$ scattering point accordingly. In addition, $\tau_i$ may be the first system delay, $\tau_j$ may be the second system delay, and $\Delta\phi_{ij}$ may be the phase difference between the $i^{th}$ second frequency band and the $j^{th}$ second frequency band.

It can be learned that a phase difference is generated when signals in different second frequency bands are processed by different system hardware in a receiving and sending process, and different system hardware generates different system delays. For two frequency bands, for example, the $i^{th}$ second frequency band and the $j^{th}$ second frequency band, the first system delay, the second system delay, and the phase difference between the $i^{th}$ second frequency band and the $j^{th}$ second frequency band are all unknown quantities in Formula (4). Therefore, if N≥3, that is, respective delays of a scattering point 1, a scattering point 2, and a scattering point 3 are obtained, specific values of the first system delay, the second system delay, and the phase difference between the $i^{th}$ second frequency band and the $j^{th}$ second frequency band may be obtained by jointly solving more than three Formulas (4).

It may be understood that the foregoing uses the $i^{th}$ second frequency band and the $j^{th}$ second frequency band as an example, and coherent combination of different or more frequency bands may also be implemented. Details are not described herein.

It may be further understood that the foregoing uses an example in which not only there is a phase difference between different frequency bands, but also system delays are different, but this is not limited. If there is only a phase difference between different frequency bands, and system delays are the same, the foregoing Formula (4) may be used to solve only the phase difference, and a quantity of required scattering points may be at least one. If there is no phase difference between different frequency bands, but system delays are different, the foregoing Formula (4) may be used to solve only the system delay, and a quantity of required scattering points may be at least two. If the second communication apparatus determines the phase difference between the $i^{th}$ second frequency band and the $j^{th}$ second frequency band and/or the system delays, the second communication apparatus may coherently combine the $i^{th}$ second frequency band and the $j^{th}$ second frequency band based on the phase difference and/or the system delays, to obtain respective delays of K scattering points. For example, the second communication apparatus may jointly solve, by using the phase difference and/or the system delays, the fourth signals received in the $i^{th}$ second frequency band and the $j^{th}$ second frequency band, for example, according to a method such as direct pulse compression combination, frequency domain interpolation, or compressed sensing, to obtain the respective delays of the K scattering points. In this case, jointly solving the fourth signals received in the $i^{th}$ second frequency band and the $j^{th}$ second frequency band is coherently combining the $i^{th}$ second frequency band and the $j^{th}$ second frequency band. K is an integer greater than N, and the respective delays of the K scattering points may be delays required for acting on (for example, reflecting, diffracting, or scattering), by the K scattering points, a signal and separately propagating the signal to the second communication apparatus after the signal is sent by the second communication apparatus or a communication apparatus (for example, the first communication apparatus) other than the second communication apparatus. In other words, the second communication apparatus obtains a larger bandwidth through coherent combination, and can measure the K scattering points (K>N) more than the original scattering points, to improve sensing performance.

For example, for a same target object, such as a vehicle, if the second communication apparatus can observe 200 scattering points on the target object in the first frequency band, after at least two second frequency bands are coherently combined into a frequency band with a bandwidth larger than that of the first frequency band, the second communication apparatus can observe 350 scattering points on the target object in the coherently combined frequency band, so that sensing for the target object is clearer, and a shape, a position, a movement speed and direction, and the like of the target object can be more accurately determined.

In conclusion, the first communication apparatus may send, in separate phases, signals used for sensing. For example, a signal such as the first signal is sent in a single frequency band in a first phase, and signals such as the second signals are sent in a plurality of inconsecutive frequency bands in a second phase. Correspondingly, the second communication apparatus may use a sensing result, for example, a delay of a scattering point, obtained through measurement in the first phase to calibrate phases and/or system delays of signals received in a plurality of frequency bands in the second phase, so as to coherently combine the plurality of frequency bands into a larger bandwidth, so that not only range resolution can be improved, but also multi-frequency-band measurement can effectively resist impact of RCS fluctuation, thereby improving sensing and detection performance.

With reference to the foregoing method, the foregoing receiving and sending mechanism, for example, whether the first communication apparatus sends signals in the first frequency band and the M second frequency bands and whether the second communication apparatus receives signals in the first frequency band and the M second frequency bands, may be determined by the first communication apparatus, or may be determined by the second communication apparatus, or may be determined by a third communication apparatus. The following separately provides descriptions. In a first possible design solution, as shown in FIG. 9, the receiving and sending mechanism is determined by the second communication apparatus, and the second communication apparatus and the third communication apparatus may be a same device. The method further includes the following steps.

S901: The first communication apparatus sends capability information to the second communication apparatus. Correspondingly, the second communication apparatus receives the capability information of the first communication apparatus.

The capability information (denoted as a first capability information) of the first communication apparatus may indicate frequency bands supported by the first communication apparatus, and the frequency bands supported by the first communication apparatus include the first frequency band and the M second frequency bands. For example, the first capability information may include a frequency and a bandwidth of the frequency band supported by the first communication apparatus. The frequency may be a center frequency or an endpoint frequency band, or may be any frequency preconfigured by the first communication apparatus and the second communication apparatus or predefined in a protocol. This is not limited. The frequency and the bandwidth of the frequency band supported by the first communication apparatus may be combined to determine a frequency domain resource included in the frequency band.

It may be understood that the frequency and the bandwidth of the frequency band supported by the first communication apparatus are optional information elements. If the second communication apparatus knows the frequency by default, the first capability information may include the bandwidth and does not include the frequency. If the second communication apparatus knows the bandwidth by default, the first capability information may include the frequency and does not include the bandwidth.

The first communication apparatus may autonomously report the first capability information on any possible occasion, for example, when the first communication apparatus establishes a connection to the second communication apparatus. Alternatively, the first communication apparatus may report the first capability information according to an indication of the second communication apparatus. For example, the second communication apparatus may send first capability reporting indication information to the first communication apparatus on any possible occasion, for example, when the first communication apparatus establishes a connection to the second communication apparatus, to indicate the first communication apparatus to report a capability of the first communication apparatus. In this way, the first communication apparatus may send the first capability information to the second communication apparatus based on the first capability reporting indication information.

It may be further understood that S901 may be performed before S801. Alternatively, if the second communication apparatus knows, by default, the frequency band supported by the first communication apparatus, S901 may not be performed.

S902: The second communication apparatus sends first configuration information to the first communication apparatus. Correspondingly, the first communication apparatus receives the first configuration information from the second communication apparatus.

The first configuration information may be carried in a radio resource control (radio resource control, RRC) message, a downlink control information (downlink control information, DCI) message, an uplink control information (uplink control information, UCI) message, or any other possible message, and indicate the first communication apparatus to send a signal in the first frequency band, for example, periodically send a signal or send a signal in a trigger manner. The following separately provides descriptions.

In a first possible implementation, the first configuration information may indicate the first communication apparatus to periodically send a signal such as the foregoing first signal in the first frequency band.

For example, the first configuration information may include at least one of the following: a frequency of the first frequency band, a bandwidth of the first frequency band, or a period for sending a signal by the first communication apparatus in the first frequency band. The frequency of the first frequency band may be a center frequency or an endpoint frequency band, or may be any frequency preconfigured by the first communication apparatus and the third communication apparatus or predefined in a protocol. This is not limited. Frequency domain resources included in the first frequency band may be determined by combining the frequency of the first frequency band and the bandwidth of the first frequency band, so that the first communication apparatus can send a signal based on a period by using these frequency domain resources.

The second communication apparatus may determine a bandwidth based on a possible size of a sensed target object. For example, the bandwidth BW (bandwidth) satisfies the following relationship: $c/BW < S/K$. $c$ represents the speed of light. S represents the foregoing size, and the size may be determined based on a type of the target object. K is a configurable constant, and represents K range resolution units corresponding to the target object. For example, if more refined sensing needs to be implemented, a larger value of K is configured; or if less refined sensing needs to be implemented, a smaller value of K is configured. The second communication apparatus may determine, based on the frequency bands that can be supported by the first communication apparatus and frequency bands that can be supported by the second communication apparatus, frequency bands supported by both the first communication apparatus and the second communication apparatus, and select the first frequency band whose bandwidth is BW from the frequency bands. The second communication apparatus may further determine, based on a possible movement speed of the sensed target object, the period for sending a signal by the first communication apparatus in the first frequency band. For example, the period T1 may satisfy the following relationship: $v*t1<c/BW$. v represents the possible movement speed of the target object, for example, a maximum movement speed. The movement speed may be determined based on the type of the target object. t1 is one of a plurality of sub-periods included in the period T1. c represents the speed of light, and BW represents the foregoing bandwidth. In other words, the second communication apparatus may perform sensing measurement a plurality of times in the period T1, and a period of each time of sensing measurement is a sub-period t1. When the period T1 ends, the second communication apparatus may choose to perform S802 by using N scattering points observed during one of the plurality of times of sensing measurement. Alternatively, when N scattering points whose quantity is enough are observed during a specific time of sensing measurement, S802 may be directly performed without waiting for the end of the period T1. In this case, duration of the sub-period t1 can ensure that a movement distance of the target object in one sub-period does not exceed one range resolution unit, to ensure that a same scattering point on the target object can always be in a same range resolution unit when the procedure shown in S802 is performed, thereby avoiding a coherent combination failure caused because a same scattering point is separately located in different range resolution units. For a specific implementation, refer to the following related descriptions.

It may be understood that the frequency and bandwidth of the first frequency band and the period for sending a signal in the first frequency band are optional information elements. If the first communication apparatus knows the frequency of the first frequency band by default, the bandwidth and the period may be indicated, and the frequency is not indicated. If the first communication apparatus knows the bandwidth of the first frequency band by default, the frequency and the period may be indicated, and the bandwidth is not indicated, and so on. Details are not described.

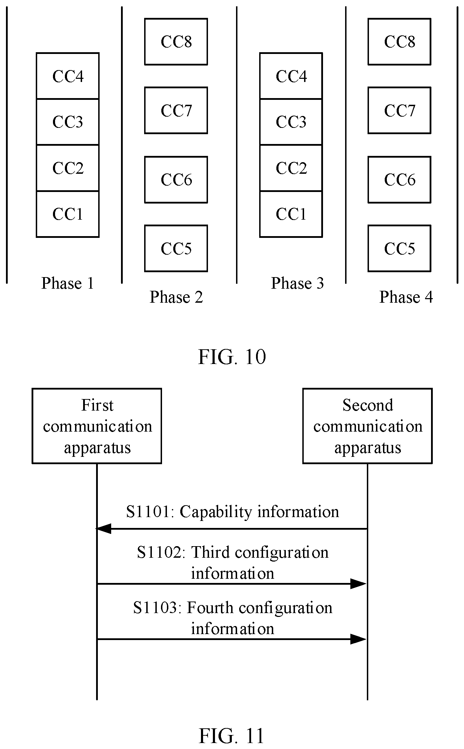

In this case, the first communication apparatus may periodically perform S801 or a phase 1 based on the received first configuration information. Specifically, as shown in FIG. 10, the first communication apparatus sends first signals on four consecutive CCs, such as a CC1, a CC2, a CC3, and a CC4.

In a second possible implementation, the first configuration information may be used to trigger the first communication apparatus to send a signal in the first frequency band.

For example, the first configuration information may include at least one of the following: a frequency of the first frequency band or a bandwidth of the first frequency band. A specific implementation principle is similar to that in the foregoing first possible implementation, and may be understood by reference. However, a difference lies in an occasion on which the second communication apparatus sends the first configuration information. For example, if the second communication apparatus has not performed a sensing operation on a target object, the second communication apparatus may send the first configuration information to the first communication apparatus, that is, S902 may be performed after S901 and before S801. For another example, if the second communication apparatus has performed a sensing operation on a target object, the second communication apparatus may send the first configuration information to the first communication apparatus when the M second frequency bands cannot be coherently combined (for example, the phase difference and/or the system delay cannot be determined due to a change of a scattering point), that is, S902 may be performed after S802.

In this case, the first communication apparatus may send the first signal in the first frequency band based on the first configuration information, that is, perform S801. In other words, the first communication apparatus may be triggered by the received first configuration information to send the first signal in the first frequency band, to implement on-demand sending, and avoid a waste of communication resources caused because a signal is still sent when sensing is not required. Certainly, the trigger manner may not be limited to the first configuration information, but may be other information different from the first configuration information, for example, first indication information. In this case, if the first communication apparatus receives the first indication information, the first communication apparatus sends the first signal in the first frequency band. S903: The second communication apparatus sends second configuration information to the first communication apparatus. Correspondingly, the first communication apparatus receives the second configuration information from the second communication apparatus.

The second configuration information may also be carried in an RRC message, a DCI message, a UCI message, or any other possible message, and indicate the first communication apparatus to send signals in the M second frequency bands, for example, periodically send signals or send signals in a trigger manner. The following separately provides descriptions.

In a third possible implementation, the second configuration information may indicate the first communication apparatus to periodically send signals such as the foregoing second signals in the M second frequency bands.

For example, the second configuration information may include at least one of the following: a frequency of each of the M second frequency bands, a bandwidth of each of the M second frequency bands, or a period for sending signals by the first communication apparatus in the M second frequency bands. The frequency of each second frequency band may be a center frequency or an endpoint frequency band, or may be any frequency preconfigured by the first communication apparatus and the third communication apparatus or predefined in a protocol. This is not limited. Frequency domain resources included in each second frequency band may be determined by combining the frequency of the second frequency band and the bandwidth of the second frequency band, so that the first communication apparatus can send a signal based on a period by using these inconsecutive frequency domain resources.

The second communication apparatus may determine, based on the frequency bands that can be supported by the first communication apparatus and frequency bands that can be supported by the second communication apparatus, frequency bands supported by both the first communication apparatus and the second communication apparatus. The second communication apparatus may determine the M second frequency bands based on a quantity of preconfigured frequency domain resources used for sensing, for example, a quantity of subcarriers (subcarrier) or a quantity of carriers, and the frequency bands supported by both the first communication apparatus and the second communication apparatus. For example, a quantity of frequency domain resources corresponding to a total bandwidth of the M second frequency bands is less than or equal to the quantity of preconfigured frequency domain resources, and the M second frequency bands are frequency bands supported by both the first communication apparatus and the second communication apparatus. In addition, a quantity of the M second frequency bands may be preconfigured or predefined. This is not specifically limited.

It may be understood that a frequency and a bandwidth of any second frequency band and a period for sending a signal in the second frequency band are all optional information elements. If the first communication apparatus knows the frequency of the second frequency band by default, only the bandwidth and the period may be indicated. If the first communication apparatus knows the frequency band of the second frequency band by default, only the frequency band and the period may be indicated, and so on. Details are not described.

In this case, the first communication apparatus may periodically perform S802 or a phase 2 based on the received second configuration information. Specifically, as shown in FIG. 10, the first communication apparatus sends second signals on four inconsecutive CCs, such as a CC5, a CC6, a CC7, and a CC8. In this way, even if the target object continuously moves, the second communication apparatus can continuously calibrate a phase and/or a system delay by continuously performing the phase 1 and the phase 2 alternately, to continuously perform high-precision sensing on the target object.

In a fourth possible implementation, the second configuration information may be used to trigger the first communication apparatus to send signals in the M second frequency bands.

For example, the second configuration information may include at least one of the following: a frequency of each of the M second frequency bands or a bandwidth of each of the M second frequency bands. A specific implementation principle is similar to that in the foregoing third possible implementation, and may be understood by reference. However, a difference lies in an occasion on which the second communication apparatus sends the second configuration information. For example, if the second communication apparatus has not performed a sensing operation on a target object, the second communication apparatus may send the second configuration information to the first communication apparatus, that is, S903 may be performed after S901 and before S802. For another example, if the second communication apparatus has performed a sensing operation on a target object, the second communication apparatus may determine whether a quantity of scattering points (or strong scattering points) observed in the first frequency band is greater than a preset threshold. For example, if two second frequency bands need to be coherently combined, and the two second frequency bands have a phase difference and respective system delays, the preset threshold may be 2. In other words, if at least three strong scattering points are observed in the first frequency band, the two second frequency bands can be coherently combined subsequently.

Therefore, if the quantity of scattering points observed by the second communication apparatus in the first frequency band is greater than the preset threshold, the second communication apparatus sends the second configuration information to the first communication apparatus, that is, S903 is performed after S801. In this way, the first communication apparatus may send the second signals in the M second frequency bands based on the second configuration information, that is, perform S801. In other words, the first communication apparatus may be triggered by the received second configuration information to send the second signals in the M second frequency bands, to implement on-demand sending, and avoid a waste of communication resources caused because a signal is still sent when sensing is not required. Certainly, the trigger manner may not be limited to the second configuration information, but may be other information different from the second configuration information, for example, second indication information. In this case, if the first communication apparatus receives the second indication information, the first communication apparatus sends the second signals in the M second frequency bands.

If the quantity of scattering points observed by the second communication apparatus in the first frequency band is less than or equal to the preset threshold, the second communication apparatus returns to perform S901, to trigger the first communication apparatus to continue to perform S801. Alternatively, when the first communication apparatus periodically performs S801, the second communication apparatus may wait until a next period, and then determine whether a quantity of scattering points observed in the first frequency band is greater than the preset threshold.

It may be understood that the first configuration information and the second configuration information may be sent together, for example, carried in same signaling or a same message, or may be separately sent, for example, carried in different signaling or messages. This is not specifically limited.

In a second possible design solution, as shown in FIG. 11, the receiving and sending mechanism is determined by the first communication apparatus, and the first communication apparatus and the third communication apparatus may be a same device. The method further includes the following steps.

S1101: The second communication apparatus sends capability information to the first communication apparatus. Correspondingly, the first communication apparatus receives the capability information of the second communication apparatus.

The capability information (denoted as a second capability information) of the second communication apparatus may indicate frequency bands supported by the second communication apparatus, and the frequency bands supported by the second communication apparatus include the first frequency band and the M second frequency bands. For example, the second capability information may include a frequency and a bandwidth of the frequency band supported by the first communication apparatus. The frequency may be a center frequency or an endpoint frequency band, or may be any frequency preconfigured by the first communication apparatus and the second communication apparatus or predefined in a protocol. This is not limited. The frequency and the bandwidth of the frequency band supported by the second communication apparatus may be combined to determine a frequency domain resource included in the frequency band.

It may be understood that the frequency and the bandwidth of the frequency band supported by the second communication apparatus are optional information elements. If the first communication apparatus knows the frequency by default, the second capability information may include the bandwidth and does not include the frequency. If the first communication apparatus knows the bandwidth by default, the second capability information may include the frequency and does not include the bandwidth.

The second communication apparatus may autonomously report the second capability information on any possible occasion, for example, when the first communication apparatus establishes a connection to the second communication apparatus. Alternatively, the second communication apparatus may report the second capability information according to an indication of the first communication apparatus. For example, the first communication apparatus may send second capability reporting indication information to the second communication apparatus on any possible occasion, for example, when the first communication apparatus establishes a connection to the second communication apparatus, to indicate the second communication apparatus to report a capability of the second communication apparatus. In this way, the second communication apparatus may send the second capability information to the first communication apparatus based on the second capability reporting indication information.

It may be further understood that S1101 may be performed before S801. Alternatively, if the second communication apparatus knows, by default, the frequency band supported by the first communication apparatus, S1101 may not be performed.

S1102: The second communication apparatus sends third configuration information to the second communication apparatus. Correspondingly, the second communication apparatus receives the third configuration information from the first communication apparatus.

The third configuration information may be carried in an RRC message, a DCI message, a UCI message, or any other possible message, and indicate the second communication apparatus to receive a signal in the first frequency band. For example, the third configuration information may include at least one of the following: a frequency of the first frequency band, a bandwidth of the first frequency band, or a period for receiving a signal by the second communication apparatus in the first frequency band. A specific implementation principle is similar to that in the foregoing first possible implementation, and may be understood by reference. Details are not described herein. It may be understood that the frequency and bandwidth of the first frequency band and the period for sending a signal in the first frequency band are optional information elements. If the second communication apparatus knows the frequency of the first frequency band by default, the bandwidth and the period may be indicated, and the frequency is not indicated. If the second communication apparatus knows the bandwidth of the first frequency band by default, the frequency and the period may be indicated, and the bandwidth is not indicated, and so on. Details are not described.

In this case, the second communication apparatus may periodically perform S801 based on the received third configuration information.

S1103: The first communication apparatus sends fourth configuration information to the second communication apparatus. Correspondingly, the second communication apparatus receives the fourth configuration information from the first communication apparatus.

The fourth configuration information may be carried in an RRC message, a DCI message, a UCI message, or any other possible message, and indicate the second communication apparatus to receive signals in the M second frequency bands. For example, the fourth configuration information may include at least one of the following: a frequency of each of the M second frequency bands, a bandwidth of each of the M second frequency bands, or a period for sending signals by the first communication apparatus in the M second frequency bands. A specific implementation principle is similar to that in the foregoing third possible implementation, and may be understood by reference. Details are not described herein.

It may be understood that a frequency and a bandwidth of any second frequency band and a period for sending a signal in the second frequency band are all optional information elements. If the second communication apparatus knows the frequency of the second frequency band by default, only the bandwidth and the period may be indicated. If the second communication apparatus knows the frequency band of the second frequency band by default, only the frequency band and the period may be indicated, and so on. Details are not described.

In this case, the second communication apparatus may periodically perform S802 based on the received fourth configuration information.

It may be further understood that the first possible design solution and the second possible design solution are optional solutions. If the first communication apparatus and the second communication apparatus are a same device, the two design solutions may not be performed.

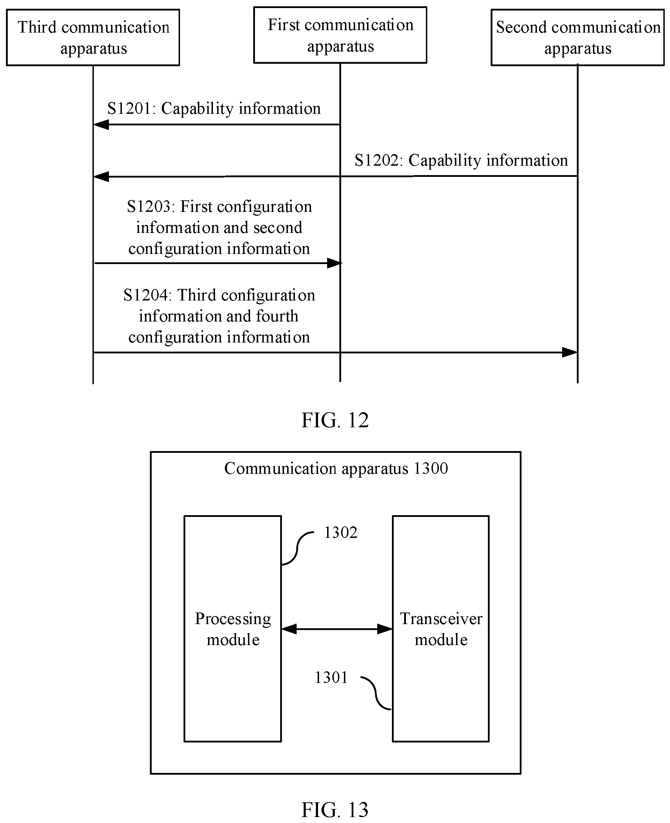

In a third possible design solution, as shown in FIG. 12, the receiving and sending mechanism is determined by the third communication apparatus, the third communication apparatus and the second communication apparatus are different devices, and the third communication apparatus and the first communication apparatus are different devices. The method further includes the following steps.

S1201: The first communication apparatus sends capability information to the third communication apparatus. Correspondingly, the third communication apparatus receives the capability information of the first communication apparatus.

A specific implementation principle of S1201 is similar to that of S901, and may be understood by reference. Details are not described herein.

S1202: The second communication apparatus sends capability information to the third communication apparatus. Correspondingly, the third communication apparatus receives the capability information of the second communication apparatus.

A specific implementation principle of S1202 is similar to that of S1001, and may be understood by reference. Details are not described herein.

S1203: The third communication apparatus sends first configuration information and second configuration information to the first communication apparatus. Correspondingly, the first communication apparatus receives the first configuration information and the second configuration information from the third communication apparatus.

A specific implementation principle of S1203 is similar to that in the first possible implementation in S902 and that in the third possible implementation in S903, and may be understood by reference. Details are not described herein.

S1204: The third communication apparatus sends third configuration information and fourth configuration information to the second communication apparatus. Correspondingly, the second communication apparatus receives the third configuration information and the fourth configuration information from the third communication apparatus.

A specific implementation principle of S1204 is similar to that of S1002 and S1003, and may be understood by reference. Details are not described herein.

It may be understood that the third configuration information and the fourth configuration information may be sent together, for example, carried in same signaling or a same message, or may be separately sent, for example, carried in different signaling or messages. This is not specifically limited.

It may be further understood that, in the third possible design solution, the first communication apparatus and the second communication apparatus may be different devices, or may be a same device. This is not limited.

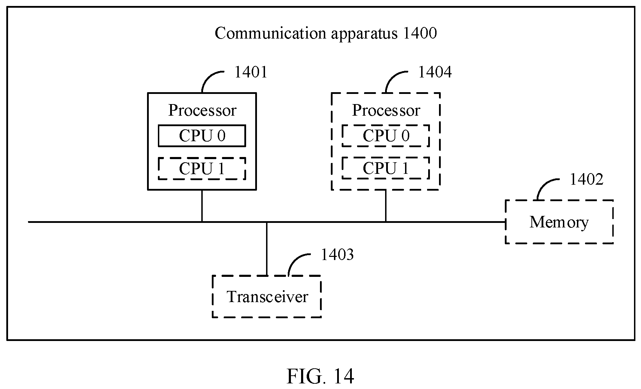

The method provided in embodiments of this application is described in detail above with reference to FIG. 8 to FIG. 12. A communication apparatus configured to perform the rate matching method provided in embodiments of this application is described in detail below with reference to FIG. 13 and FIG. 14.

FIG. 13 is a diagram 1 of a structure of a communication apparatus according to an embodiment of this application. For example, as shown in FIG. 13, the communication apparatus 1300 includes a transceiver module 1301 and a processing module 1302. For ease of description, FIG. 13 shows only main components of the communication apparatus.

The transceiver module 1301 is configured to perform receiving and sending functions in the method shown in FIG. 8 to FIG. 11, and the processing module 1302 is configured to perform a function other than the receiving and sending functions in the method shown in FIG. 8 to FIG. 11. Optionally, the transceiver module 1301 may include a sending module (not shown in FIG. 13) and a receiving module (not shown in FIG. 13). The sending module is configured to implement a sending function of the communication apparatus 1300, and the receiving module is configured to implement a receiving function of the communication apparatus 1300.

Optionally, the communication apparatus 1300 may further include a storage module (not shown in FIG. 13). The storage module stores a program or instructions. When the processing module 1302 executes the program or the instructions, the communication apparatus 1300 is enabled to perform a function of the terminal or the network device in the method shown in FIG. 8 to FIG. 12 in the foregoing methods.

It may be understood that the communication apparatus 1300 may be a terminal or a network device, may be a chip (system) or another part or component that may be disposed in a terminal or a network device, or may be an apparatus that includes a terminal or a network device. This is not limited in this application.

In addition, for technical effects of the communication apparatus 1300, refer to the technical effects of the rate matching method shown in FIG. 8 to FIG. 11. Details are not described herein again.

FIG. 14 is a diagram 2 of a structure of a communication apparatus according to an embodiment of this application. For example, the communication apparatus may be a terminal, or may be a chip (system) or another part or component that may be disposed in a terminal. As shown in FIG. 14, the communication apparatus 1400 may include a processor 1401. Optionally, the communication apparatus 1400 may further include a memory 1402 and/or a transceiver 1403. The processor 1401 is coupled to the memory 1402 and the transceiver 1403, for example, through a communication bus.

The following describes components of the communication apparatus 1400 in detail with reference to FIG. 14.

The processor 1401 is a control center of the communication apparatus 1400, and may be a processor, or may be a generic term of a plurality of processing elements. For example, the processor 1401 is one or more central processing units (central processing unit, CPU), or may be an application-specific integrated circuit (application-specific integrated circuit, ASIC), or may be one or more integrated circuits configured to implement embodiments of this application, for example, one or more microprocessors (digital signal processor, DSP) or one or more field programmable gate arrays (field programmable gate array, FPGA).

Optionally, the processor 1401 may run or execute a software program stored in the memory 1402 and invoke data stored in the memory 1402, to perform various functions of the communication apparatus 1400, for example, perform the communication method shown in FIG. 8 to FIG. 12. During specific implementation, in an embodiment, the processor 1401 may include one or more CPUs, for example, a CPU 0 and a CPU 1 shown in FIG. 14.

During specific implementation, in an embodiment, the communication apparatus 1400 may alternatively include a plurality of processors, for example, the processor 1401 and a processor 1404 shown in FIG. 14. Each of the processors may be a single-core processor (single-CPU) or a multi-core processor (multi-CPU). The processor herein may be one or more devices, circuits, and/or processing cores configured to process data (for example, computer program instructions). The memory 1402 is configured to store a software program for performing the solutions of this application, and the processor 1401 controls execution of the software program. For a specific implementation, refer to the foregoing method embodiments. Details are not described herein again.

Optionally, the memory 1402 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. However, this is not limited. The memory 1402 may be integrated with the processor 1401, or may exist independently and is coupled to the processor 1401 by using an interface circuit (not shown in FIG. 14) of the communication apparatus 1400. This is not specifically limited in this embodiment of this application.

The transceiver 1403 is configured to communicate with another communication apparatus. For example, the communication apparatus 1400 is a terminal, and the transceiver 1403 may be configured to communicate with a network device or another terminal device. For another example, the communication apparatus 1400 is a network device, and the transceiver 1403 may be configured to communicate with a terminal or another network device.

Optionally, the transceiver 1403 may include a receiver and a transmitter (not separately shown in FIG. 14). The receiver is configured to implement a receiving function, and the transmitter is configured to implement a sending function.

Optionally, the transceiver 1403 may be integrated with the processor 1401, or may exist independently and is coupled to the processor 1401 by using an interface circuit (not shown in FIG. 14) of the communication apparatus 1400. This is not specifically limited in this embodiment of this application.

It may be understood that the structure of the communication apparatus 1400 shown in FIG. 14 does not constitute a limitation on the communication apparatus. An actual communication apparatus may include more or fewer components than those shown in the figure, or combine some components, or have different component arrangements.

In addition, for technical effects of the communication apparatus 1400, refer to the technical effects of the method in the foregoing method embodiments. Details are not described herein again.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or computer programs are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a single item (piece) or any combination of a plurality of items (pieces). For example, at least one (piece) of a, b, or c may indicate: a, b, c, a-b, a-c, b-c, or a-b-c, where a, b, and c may be singular or plural.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1. A communication method, applied to a first communication apparatus, and comprising:

   sending, by the first communication apparatus, a first signal in a first frequency band; and
   sending, by the first communication apparatus, second signals in M inconsecutive second frequency bands, wherein M is an integer greater than or equal to 2, and the first signal and the second signals are signals used for sensing.

2. The method according to claim 1, wherein a bandwidth of the first frequency band is greater than a bandwidth of any one of the M second frequency bands.

3. The method according to claim 1 or 2, wherein the method further comprises:
   receiving, by the first communication apparatus, capability information from a second communication apparatus, wherein the capability information indicates frequency bands supported by the second communication apparatus, and the frequency bands supported by the second communication apparatus comprise the first frequency band and the M second frequency bands.

4. The method according to claim 1 or 2, wherein the method further comprises:
   sending, by the first communication apparatus, capability information to a third communication apparatus, wherein the capability information indicates frequency bands supported by the first communication apparatus, and the frequency bands supported by the first communication apparatus comprise the first frequency band and the M second frequency bands.

5. The method according to claim 4, wherein the method further comprises:
   receiving, by the first communication apparatus, first configuration information from the third communication apparatus, wherein the first configuration information indicates the first communication apparatus to send a signal in the first frequency band.

6. The method according to claim 5, wherein the first configuration information comprises at least one of the following: a frequency of the first frequency band, a bandwidth of the first frequency band, or a period for sending a signal by the first communication apparatus in the first frequency band.

7. The method according to any one of claims 4 to 6, wherein the method further comprises:
   receiving, by the first communication apparatus, second configuration information from the third communication apparatus, wherein the second configuration information indicates the first communication apparatus to send signals in the M second frequency bands.

8. The method according to claim 7, wherein the second configuration information comprises at least one of the following: a frequency of each of the M second frequency bands, a bandwidth of each of the M second frequency bands, or a period for sending signals by the first communication apparatus in the M second frequency bands.

9. The method according to claim 3, wherein the method further comprises:
sending, by the first communication apparatus, third configuration information to the second communication apparatus, wherein the third configuration information indicates the second communication apparatus to receive a signal in the first frequency band.

10. The method according to claim 9, wherein the third configuration information comprises at least one of the following: a frequency of the first frequency band, a bandwidth of the first frequency band, or a period for receiving a signal by the second communication apparatus in the first frequency band.

11. The method according to claim 3, 9, or 10, wherein the method further comprises:
sending, by the first communication apparatus, fourth configuration information to the second communication apparatus, wherein the fourth configuration information indicates the second communication apparatus to receive signals in the M second frequency bands.

12. The method according to claim 11, wherein the fourth configuration information comprises at least one of the following: a frequency of each of the M second frequency bands, a bandwidth of each of the M second frequency bands, or a period for receiving signals by the second communication apparatus in the M second frequency bands.

13. The method according to any one of claims 1 to 12, wherein the first signal is used to determine a delay of a scattering point, and the delay of the scattering point is a delay required for acting, by the scattering point, on a signal sent by the first communication apparatus and propagating the signal to a communication apparatus that receives the signal.

14. The method according to any one of claims 1 to 13, wherein the second signals are used to coherently combine at least two of the M second frequency bands.

15. A communication method, applied to a second communication apparatus, and comprising:

receiving, by the second communication apparatus, a third signal in a first frequency band;
receiving, by the second communication apparatus, fourth signals in M inconsecutive second frequency bands, wherein M is an integer greater than or equal to 2; and
performing, by the second communication apparatus, sensing processing based on the third signal and the fourth signals.

16. The method according to claim 15, wherein a bandwidth of the first frequency band is greater than a bandwidth of any one of the M second frequency bands.

17. The method according to claim 15 or 16, wherein performing, by the second communication apparatus, sensing processing based on the third signal and the fourth signals comprises:
performing, by the second communication apparatus based on the third signal and the fourth signals, sensing processing for coherently combining the M second frequency bands.

18. The method according to claim 17, wherein performing, by the second communication apparatus based on the third signal and the fourth signals, sensing processing for coherently combining the M second frequency bands comprises:

determining, by the second communication apparatus, respective system delays of at least two of the M second frequency bands and/or a phase difference between the at least two second frequency bands based on the third signal and the fourth signals; and
performing, by the second communication apparatus based on the respective system delays of the at least two second frequency bands and/or the phase difference between the at least two second frequency bands, sensing processing for coherently combining the at least two second frequency bands.

19. The method according to any one of claims 15 to 18, wherein the method further comprises:
receiving, by the second communication apparatus, capability information from a first communication apparatus, wherein the capability information indicates frequency bands supported by the first communication apparatus, and the frequency bands supported by the first communication apparatus comprise the first frequency band and the M second frequency bands.

20. The method according to any one of claims 15 to 18, wherein the method further comprises:

    sending, by the second communication apparatus, capability information to a third communication apparatus, wherein the capability information indicates frequency bands supported by the second communication apparatus, and the frequency bands supported by the second communication apparatus comprise the first frequency band and the M second frequency bands.

21. The method according to claim 19, wherein the method further comprises:

    sending, by the second communication apparatus, first configuration information to the first communication apparatus, wherein the first configuration information indicates the first communication apparatus to send a signal in the first frequency band.

22. The method according to claim 21, wherein the first configuration information comprises at least one of the following: a frequency of the first frequency band, a bandwidth of the first frequency band, or a period for sending a signal by the first communication apparatus in the first frequency band.

23. The method according to claim 21 or 22, wherein sending, by the second communication apparatus, the first configuration information to the first communication apparatus comprises:

    sending, by the second communication apparatus, the first configuration information to the first communication apparatus when the M second frequency bands cannot be coherently combined.

24. The method according to claim 19 or any one of claims 21 to 23, wherein the method further comprises:

    sending, by the second communication apparatus, second configuration information to the first communication apparatus, wherein the second configuration information indicates the first communication apparatus to send signals in the M second frequency bands.

25. The method according to claim 24, wherein the second configuration information comprises at least one of the following: a frequency of each of the M second frequency bands, a bandwidth of each of the M second frequency bands, or a period for sending signals by the first communication apparatus in the M second frequency bands.

26. The method according to claim 25, wherein sending, by the second communication apparatus, the second configuration information to the first communication apparatus comprises:

    sending, by the second communication apparatus, the second configuration information to the first communication apparatus when a quantity of scattering points observed in the first frequency band is greater than a preset threshold.

27. The method according to claim 20, wherein the method further comprises:

    receiving, by the second communication apparatus, third configuration information from the third communication apparatus, wherein the third configuration information indicates the second communication apparatus to receive a signal in the first frequency band.

28. The method according to claim 27, wherein the third configuration information comprises at least one of the following: a frequency of the first frequency band, a bandwidth of the first frequency band, or a period for receiving a signal by the second communication apparatus in the first frequency band.

29. The method according to claim 20, 27, or 28, wherein the method further comprises:

    receiving, by the second communication apparatus, fourth configuration information from the third communication apparatus, wherein the fourth configuration information indicates the second communication apparatus to receive signals in the M second frequency bands.

30. The method according to claim 29, wherein the fourth configuration information comprises at least one of the following: a frequency of each of the M second frequency bands, a bandwidth of each of the M second frequency bands, or a period for receiving signals by the second communication apparatus in the M second frequency bands.

31. The method according to any one of claims 18 to 30, wherein the fourth signals received in the M second frequency bands comprise an $i^{th}$ fourth signal and a $j^{th}$ fourth signal, the $i^{th}$ fourth signal is a signal received in an $i^{th}$ second frequency band, the $j^{th}$ fourth signal is a signal received in a $j^{th}$ second frequency band, i and j are different, i and j are any integers from 1 to M, and the at least two second frequency bands comprise the $i^{th}$ second frequency band and the j$^{th}$ second frequency band; and

determining, by the second communication apparatus, the respective system delays of the at least two of the M second frequency bands and/or the phase difference between the at least two second frequency bands based on the third signal and the fourth signals comprises:

determining, by the second communication apparatus, respective delays of N scattering points based on the third signal, wherein N is a positive integer, and the respective delays of the N scattering points are delays required for separately propagating a signal to the second communication apparatus through the N scattering points after the signal is sent by the second communication apparatus or a communication apparatus other than the second communication; and

determining, by the second communication apparatus, a phase difference between the i$^{th}$ second frequency band and the j$^{th}$ second frequency band and/or system delays based on the respective delays of the N scattering points, a phase of the i$^{th}$ fourth signal, and a phase of the j$^{th}$ fourth signal, wherein the system delays comprise a first system delay corresponding to the i$^{th}$ second frequency band and a second system delay corresponding to the j$^{th}$ second frequency band.

32. The method according to claim 31, wherein at least one of the phase difference and the system delay, the respective delays of the N scattering points, the phase of the i$^{th}$ fourth signal, and the phase of the j$^{th}$ fourth signal satisfy the following relationship:

$$\phi_{i,j}^{l} = 2\pi(f_j - f_i)\tau^l + 2\pi(f_j\tau_j - 2f_i\tau_i) + \Delta\phi_{ij}$$, wherein $\phi_{i,j}^{l}$ is a difference between the phase of the i$^{th}$ fourth signal and the phase of the j$^{th}$ fourth signal, $f_i$ is a center frequency of the i$^{th}$ second frequency band, $f_j$ is a center frequency of the j$^{th}$ second frequency band, $\tau^l$ is a delay of an $l^{th}$ scattering point in the N scattering points, $l$ is any integer from 1 to N, $\tau_i$ is the first system delay, $\tau_j$ is the second system delay, and $\Delta\phi_{ij}$ is the phase difference.

33. The method according to claim 32, wherein signal strength of a signal corresponding to the $l^{th}$ scattering point is greater than a strength threshold, signal strength of a signal corresponding to another scattering point is less than or equal to the strength threshold, and the another scattering point is a scattering point other than the $l^{th}$ scattering point in an $l^{th}$ range resolution unit in which the $l^{th}$ scattering point is located.

34. The method according to any one of claims 31 to 33, wherein the phase difference is a difference between a phase offset generated when the second communication apparatus and the first communication apparatus process a signal in the i$^{th}$ second frequency band and a phase offset generated when the second communication apparatus and the first communication apparatus process a signal in the j$^{th}$ second frequency band, the first system delay is a delay generated when the second communication apparatus and the first communication apparatus process a signal in the i$^{th}$ second frequency band, and the second system delay is a delay generated when the second communication apparatus and the first communication apparatus process a signal in the j$^{th}$ second frequency band.

35. The method according to any one of claims 18 to 34, wherein performing, by the second communication apparatus based on the respective system delays of the at least two second frequency bands and/or the phase difference between the at least two second frequency bands, sensing processing for coherently combining the at least two second frequency bands comprises:

coherently combining, by the second communication apparatus, the i$^{th}$ second frequency band and the j$^{th}$ second frequency band based on the phase difference and/or the system delays, to obtain respective delays of the K scattering points, wherein K is an integer greater than N, and the respective delays of the K scattering points are delays required for acting, by the K scattering points, on a signal and separately propagating the signal to the second communication apparatus after the signal is sent by the second communication apparatus or a communication apparatus other than the second communication apparatus.

36. A communication method, applied to a third communication apparatus, and comprising:

receiving, by the third communication apparatus, capability information of a first communication apparatus, wherein the capability information of the first communication apparatus indicates frequency bands supported by the first communication apparatus, the frequency bands supported by the first communication apparatus comprise a first frequency band and M inconsecutive second frequency bands, and M is an integer greater than or equal to 2; and

sending, by the third communication apparatus, first configuration information and second configuration information to the first communication apparatus based on the capability information, wherein the first configuration information indicates the first communication apparatus to send a signal in the first frequency band, the second configuration information indicates the first communication apparatus to send signals in the M second frequency bands, and the signals in the first frequency band and the M second frequency bands are signals used for sensing.

37. The method according to claim 36, wherein the first configuration information comprises at least one of the following: a frequency of the first frequency band, a bandwidth of the first frequency band, or a period for sending a signal by the first communication apparatus in the first frequency band.

38. The method according to claim 36, wherein the second configuration information comprises at least one of the following: a frequency of each of the M second frequency bands, a bandwidth of each of the M second frequency bands, or a period for sending signals by the first communication apparatus in the M second frequency bands.

39. The method according to any one of claims 36 to 38, wherein the method further comprises:

receiving, by the third communication apparatus, capability information of a second communication apparatus, wherein the capability information of the second communication apparatus indicates frequency bands supported by the second communication apparatus, and the frequency bands supported by the second communication apparatus comprise the first frequency band and the M inconsecutive second frequency bands; and
correspondingly, sending, by the third communication apparatus, the first configuration information and the second configuration information to the first communication apparatus based on the capability information comprises:
sending, by the third communication apparatus, the first configuration information and the second configuration information to the first communication apparatus based on the capability information of the first communication apparatus and the capability information of the second communication apparatus.

40. A communication method, applied to a third communication apparatus, and comprising:

receiving, by the third communication apparatus, capability information of a second communication apparatus, wherein the capability information of the second communication apparatus indicates frequency bands supported by the second communication apparatus, the frequency bands supported by the second communication apparatus comprise a first frequency band and M inconsecutive second frequency bands, and M is an integer greater than or equal to 2; and
sending, by the third communication apparatus, third configuration information and fourth configuration information to the second communication apparatus based on the capability information, wherein the third configuration information indicates the second communication apparatus to receive a signal in the first frequency band, the fourth configuration information indicates the second communication apparatus to receive signals in the M second frequency bands, and the signals in the first frequency band and the M second frequency bands are signals used for sensing.

41. The method according to claim 40, wherein the third configuration information comprises at least one of the following: a frequency of the first frequency band, a bandwidth of the first frequency band, or a period for receiving a signal by the second communication apparatus in the first frequency band.

42. The method according to claim 41, wherein the fourth configuration information comprises at least one of the following: a frequency of each of the M second frequency bands, a bandwidth of each of the M second frequency bands, or a period for receiving signals by the second communication apparatus in the M second frequency bands.

43. The method according to any one of claims 40 to 42, wherein the method further comprises:

receiving, by the third communication apparatus, capability information of a first communication apparatus, wherein the capability information of the first communication apparatus indicates frequency bands supported by the first communication apparatus, and the frequency bands supported by the first communication apparatus comprise the first frequency band and the M inconsecutive second frequency bands; and
correspondingly, sending, by the third communication apparatus, the third configuration information and the fourth configuration information to the second communication apparatus based on the capability information comprises:

sending, by the third communication apparatus, the third configuration information and the fourth configuration information to the second communication apparatus based on the capability information of the first communication apparatus and the capability information of the second communication apparatus.

44. A communication apparatus, wherein the apparatus comprises a module configured to perform the method according to any one of claims 1 to 43.

45. A communication apparatus, wherein the communication apparatus comprises a processor and a memory, the memory is configured to store computer instructions, and when the processor executes the instructions, the communication apparatus is enabled to perform the method according to any one of claims 1 to 43.

46. A communication system, wherein the communication system comprises a first communication apparatus and a second communication apparatus, the first communication apparatus is configured to perform the method according to any one of claims 1 to 16, and the second communication apparatus is configured to perform the method according to any one of claims 17 to 35.

47. The system according to claim 45, wherein the communication system further comprises a third communication apparatus, and the third communication apparatus is configured to perform the method according to any one of claims 36 to 43.

48. A computer-readable storage medium, wherein the computer-readable storage medium comprises a computer program or instructions, and when the computer program or the instructions are run on a computer, the computer is enabled to perform the method according to any one of claims 1 to 43.

49. A computer program product, comprising a computer program or instructions, and when the computer program or the instructions are run on a computer, the computer is enabled to perform the method according to any one of claims 1 to 43.

Sending by a base
station and receiving
by a terminal

Sending by a terminal
and receiving by a
base station

Sending by a base
station A and receiving
by a base station B

Sending by a terminal
A and receiving by a
terminal B

Self-sending and
self-receiving by a
base station

Self-sending and
self-receiving by a
terminal

FIG. 1

Sensing area

D1

D2

FIG. 2

FIG. 3

FIG. 4

$f_0$

Total bandwidth B0

$f_1$ $f_2$ $f_3$ $f_4$

B1 B2 B3 B4

FIG. 5

| CC1 BB | → | DAC1 | → | IF | → | RF | → | Antenna |
| CC2 BB | → | DAC2 | → | IF | → | RF | → | Antenna |
| CC3 BB | → | DAC3 | → | IF | → | RF | → | Antenna |
| CC4 BB | → | DAC4 | → | IF | → | RF | → | Antenna |

| CC1 BB | ← | ADC1 | ← | IF | ← | RF | ← | Antenna |
| CC2 BB | ← | ADC2 | ← | IF | ← | RF | ← | Antenna |
| CC3 BB | ← | ADC3 | ← | IF | ← | RF | ← | Antenna |
| CC4 BB | ← | ADC4 | ← | IF | ← | RF | ← | Antenna |

FIG. 6

| First communication apparatus | Second communication apparatus |

FIG. 7

S801:

First communication apparatus

Second communication apparatus

First signal

Third signal

S802:

First communication apparatus

Second communication apparatus

Second signal

Fourth signal

S803

Perform sensing processing based on the third signal and the fourth signal

FIG. 8

First communication apparatus

Second communication apparatus

S901: Capability information

S902: First configuration information

S903: Second configuration information

FIG. 9

CC8

CC4

CC7

CC3

CC8

CC2

CC6

CC4

CC7

CC1

CC3

CC6

CC2

CC5

CC1

CC5

Phase 1

Phase 2

Phase 3

Phase 4

FIG. 10

First communication apparatus

Second communication apparatus

S1101: Capability information

S1102: Third configuration information

S1103: Fourth configuration information

FIG. 11

| Third communication apparatus | First communication apparatus | Second communication apparatus |
|---|---|---|

S1201: Capability information

S1202: Capability information

S1203: First configuration information and second configuration information

S1204: Third configuration information and fourth configuration information

FIG. 12

Communication apparatus 1300

1302

Processing module

Transceiver module

1301

FIG. 13

Communication apparatus 1400

1401

Processor

CPU 0

CPU 1

1404

Processor

CPU 0

CPU 1

1402

Memory

1403

Transceiver

FIG. 14

## INTERNATIONAL SEARCH REPORT

| International application No. |
| --- |
| **PCT/CN2023/121815** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNKI, DWPI, CNTXT, ENTXTC, 3GPP: 感知, 感测, 通感, 多, 频段, 频率, 载频, 载波, 带宽, 非连续, 不连续, 延时, 时延, 合成, 拼接, 能力, 支持, multi-band, pattern, frequency, continuous, capabilit+, abilit+, support, JCS, JCAS, HCS, ISAC, ICSS, sensing

### C. DOCUMENTS CONSIDERED TO BE RELEVANT

| Category* | Citation of document, with indication, where appropriate, of the relevant passages | Relevant to claim No. |
| --- | --- | --- |
| A | CN 115835383 A (ZTE CORP.) 21 March 2023 (2023-03-21)<br>description, paragraphs 0065-0185 | 1-49 |
| A | WO 2023000196 A1 (GUANGDONG OPPO MOBILE TELECOMMUNICATIONS CORP., LTD.) 26 January 2023 (2023-01-26)<br>entire document | 1-49 |
| A | CN 115413407 A (IDAC HOLDINGS, INC.) 29 November 2022 (2022-11-29)<br>entire document | 1-49 |
| A | CN 116456392 A (RESEARCH INSTITUTE OF CHINA MOBILE COMMUNICATIONS CO., LTD. et al.) 18 July 2023 (2023-07-18)<br>entire document | 1-49 |
| A | WO 2023272602 A1 (GUANGDONG OPPO MOBILE TELECOMMUNICATIONS CORP., LTD.) 05 January 2023 (2023-01-05)<br>entire document | 1-49 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 June 2024** | **19 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 780 048 A1**

**INTERNATIONAL SEARCH REPORT**
**Information on patent family members**

International application No.

**PCT/CN2023/121815**

| Patent document cited in search report | | | Publication date (day/month/year) | Patent family member(s) | | | Publication date (day/month/year) |
|---|---|---|---|---|---|---|---|
| CN | 115835383 | A | 21 March 2023 | WO | 2023040780 | A1 | 23 March 2023 |
| | | | | KR | 20240052842 | A | 23 April 2024 |
| WO | 2023000196 | A1 | 26 January 2023 | CN | 117203914 | A | 08 December 2023 |
| CN | 115413407 | A | 29 November 2022 | EP | 4115558 | A1 | 11 January 2023 |
| | | | | BR | 112022017798 | A2 | 29 November 2022 |
| | | | | US | 2023086144 | A1 | 23 March 2023 |
| | | | | KR | 20220150383 | A | 10 November 2022 |
| | | | | WO | 2021178941 | A1 | 10 September 2021 |
| CN | 116456392 | A | 18 July 2023 | | None | | |
| WO | 2023272602 | A1 | 05 January 2023 | CN | 117242365 | A | 15 December 2023 |

Form PCT/ISA/210 (patent family annex) (July 2022)